# FASCICULE DE BREVET EUROPEEN

(11) **EP 0 827 475 B1**
(45) Date de publication et mention de la délivrance du brevet: **11.06.2003**
(21) Numéro de dépôt: 97915512.4
(22) Date de dépôt: 18.03.1997
(51) Int. Cl.: B64G 3/00, B64G 1/22, H01Q 1/28

(54) **PERFECTIONNEMENTS AUX SATELLITES D'OBSERVATION OU DE TELECOMMUNICATION**
VERBESSERUNGEN AN BEOBACHTUNGSSATELLITEN ODER FERNMELDESATELLITEN
IMPROVEMENTS TO OBSERVATION OR TELECOMMUNICATION SATELLITES

(30) Priorité: 20.03.1996 FR 9603444; 07.06.1996 FR 9607064
(43) Date de publication de la demande: 11.03.1998
(73) Titulaire: CENTRE NATIONAL D'ETUDES SPATIALES, 75001 Paris (FR)
(72) Inventeur: AGUTTES, Jean-Paul, 31100 Toulouse (FR); CONDE, Eric, 31280 Aigrefeuille (FR); SOMBRIN, Jacques, 31400 Toulouse (FR)
(74) Mandataire: Schrimpf, Robert
(86) Numéro de dépôt international: FR9700478
(87) Numéro de publication internationale: WO97034801

(56) Documents cités:
- EP-A- 0 640 844
- IGARSS '89 - 12TH CANADIAN SYMPOSIUM ON REMOTE SENSING - REMOTE SENSING: AN ECONOMIC TOOL FOR THE NINETIES, vol. 3, 10 - 14 Juillet 1989, VANCOUVER, CANADA, pages 1485-1490, XP000139289 IM ET AL.: "TROPICAL RAIN MAPPING RADAR ON THE SPACE STATION"
- IGARSS '89 - 12TH CANADIAN SYMPOSIUM ON REMOTE SENSING - REMOTE SENSING: AN ECONOMIC TOOL FOR THE NINETIES, vol. 2, 10 - 14 Juillet 1989, VANCOUVER, CANADA, pages 570-574, XP000139163 BENZ ET AL.: "MULTIMISSION CAPABILITY OF THE EUROPEAN POLAR PLATFORM"
- ESA BULLETIN, no. 76, Novembre 1993, NOORDWIJK, NL, pages 30-35, XP000425520 KARNEVI ET AL.: "ENVISAT'S ADVANCED SYNTHETIC APERTURE RADAR: ASAR"
- PROCEEDINGS OF THE IEEE, vol. 79, no. 6, Juin 1991, NEW YORK, USA, pages 791-799, XP000262353 ATTEMA: "THE ACTIVE MICROWAVE INSTRUMENT ON-BOARD THE ERS-1 SATELLITE"
- 1991 IEEE NATIONAL RADAR CONFERENCE, 12 - 12 Mars 1991, LOS ANGELES, CALIFORNIA, USA, pages 41-45, XP000220757 HIGHTOWER ET AL.: "A SPACE-FED PHASED ARRAY FOR SURVEILLANCE FROM SPACE"

## Description

La présente invention est relative à un satellite spatial.

Dans la suite du texte, l'invention va principalement être décrite dans le cas d'un satellite d'observation radar.

Comme on le comprendra aisément tout au long de la description, elle s'applique également avantageusement aux satellites de télécommunication.

De même, l'invention sera décrite dans le cas d'une orbite autour de la terre. D'autres astres seraient bien entendu possibles.

### PRESENTATION DE L'ART ANTERIEUR

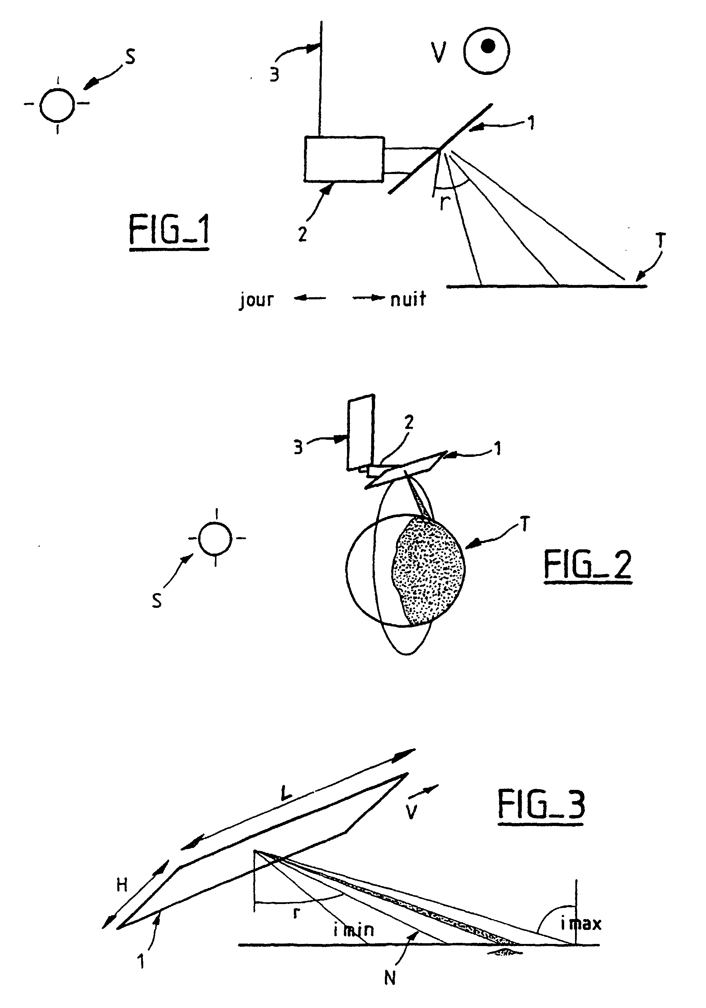

Ainsi qu'on l'a illustré sur les figures 1 à 3, un satellite radar est habituellement principalement constitué d'une antenne plane rectangulaire 1, d'un module de servitude 2, ainsi que de panneaux solaires 3.

Les panneaux solaires 3 sont orientés en direction du soleil S, tandis que l'antenne 1 est orientée en direction de la terre T et image latéralement par rapport au vecteur vitesse V du satellite.

Les différents paramètres d'un tel satellite sont les suivants.

### DIMENSIONS DE L'ANTENNE RADAR

La dimension de l'antenne 1 selon la direction du vecteur vitesse V du satellite, ou longueur L sur la figure 3, est directement liée à la résolution de l'image suivant ce même axe (résolution azimut ou Doppler) par un rapport compris entre 1,1 et 2.

Perpendiculairement au vecteur vitesse V, la hauteur H de l'antenne 1 croît en fonction de la fauchée de l'image (largeur au sol de l'image transversalement au vecteur vitesse), de l'incidence maximum (écart angulaire entre l'axe de visée et la verticale du point au sol imagé) et de l'altitude et en fonction de l'inverse de la longueur L. De plus, pour des conditions données sur les paramètres qui précèdent, la hauteur est directement proportionnelle à la longueur d'onde du radar.

Par conséquent, un radar à basse résolution (< 10 m) utilise une antenne allongée suivant le vecteur vitesse (L = 15 m et H = 1,5 m pour RADARSAT), tandis que la moyenne ou haute résolution (< 5 m) peut conduire à des antennes ayant H bien supérieur à L, en particulier à fréquence basse (L ou S) ou en combinaison de plusieurs fréquences avec des antennes juxtaposées selon la hauteur H.

### INCLINAISON DE ROULIS

Ainsi qu'illustré sur la figure 3, l'ajustement autour de l'axe roulis de l'axe de visée du faisceau de l'antenne 1 permet de positionner l'image plus ou moins loin de la verticale du satellite (couverture du domaine d'incidence). Cet ajustement est désormais obtenu par balayage électronique entre deux incidences iₘᵢₙ et iₘₐₓ, mais afin de limiter la gamme de balayage et la hauteur de l'antenne 1, celle-ci est orientée de façon que sa normale N vise une direction médiane dans le domaine d'incidence. L'angle r de roulis est typiquement de 30°.

### PUISSANCE ET HEURE LOCALE DE L'ORBITE

Contrairement à l'observation optique, l'observation radar ne nécessite aucune condition particulière d'éclairement solaire de la scène. Par contre, elle est consommatrice d'énergie électrique satellite. Toute ceci conduit à retenir une orbite héliosynchrone d'heure locale 6 H ou 18 H, permettant aux panneaux solaires 3 du satellite de rester quasiment en permanence exposés face au soleil et productifs (peu d'éclipses contrairement à une heure locale diurne telle qu'utilisée en optique) (voir figure 1).

En général, le générateur solaire que constituent les panneaux 3, ne suffit pas pour alimenter le radar. Le satellite emporte également des batteries dans lesquelles le radar puise. Ces batteries sont rechargées lorsque le radar ne fonctionne pas.

On notera que cette approche résulte également du fait que les satellites radar utilisent des modules de servitudes non conçus spécifiquement, et donc compatibles avec des orbites diurnes qui imposent l'existence d'importantes batteries pour assurer des durées d'éclipses importantes.

### STABILITÉ DIMENSIONNELLE ET D'ATTITUDE

Pour fonctionner correctement, l'antenne 1 doit respecter une bonne planéité ainsi qu'une bonne précision de pointage de l'axe N normal à sa surface. L'approche classique consiste à imposer une stricte stabilité dimensionnelle mécanique à l'ensemble antenne 1 et module de servitude 2 et à faire assurer les exigences de pointages par le système de contrôle d'attitude du module de servitude 2.

Il a déjà été proposé dès lors que l'on utilise des antennes 1 à balayage électronique, de relâcher la planéité et l'attitude du panneau d'antenne et d'agir sur les déphaseurs des antennes élémentaires qui constituent l'antenne 1 pour reconstituer un plan d'onde parfait et correctement orienté. Ceci permet de relâcher les contraintes structurelles de l'ensemble du satellite et de l'antenne et de ne faire jouer au système de contrôle d'attitude du module 2 qu'un rôle grossier.

Ce principe d'adaptation décentralisée au niveau de l'antenne 1 repose essentiellement sur la capacité de mesurer d'une part les déformations de sa planéité et d'autre part l'attitude de son plan moyen.

A ce jour toutefois, les réalisations envisagées à partir de capteurs de déformation ou de planéité (notamment optiques) ne sont pas pleinement satisfaisantes. De plus, ceux-ci ne permettront pas la mesure de l'attitude du repère de l'antenne 1, cette dernière devant soit rester totalement à la charge du module de servitude, soit être réalisée par l'intermédiaire de capteurs d'attitude absolue placés au niveau de l'antenne 1.

Quelle que soit l'évolution de ces techniques d'adaptation décentralisée, le système d'attitude du module de servitude 2 garde la charge de maintenir la position de référence de l'antenne 1. En particulier, l'axe de la plus longue dimension (ou de plus petite inertie) doit rester soit aligné le long du vecteur vitesse (longueur L pour un radar basse résolution), soit normal au vecteur vitesse avec un angle roulis mentionné précédemment (dimension H pour un radar haute résolution) de sorte que le module de servitude doit en permanence compenser des couples de gravité. Cette compensation impose des couples permanents venus du système central d'attitude ainsi qu'une rigidité mécanique minimale de l'ensemble du satellite et des mécanismes de déploiement de l'antenne pour assurer le relais de ces couples. On notera également que la présence du module de servitude 2 apporte ses propres contraintes sur les inerties et introduit, avec la pression solaire exercée sur les panneaux solaires 3, un autre couple perturbateur.

### RESUME DE L'INVENTION

L'invention a quant à elle pour objet un satellite, notamment d'observation radar ou de télécommunication, d'un type nouveau.

Un but de l'invention est de proposer en particulier un satellite dont la sensibilité soit mieux adaptée que celle des satellites de l'art antérieur et permettant de meilleures performances opérationnelles d'accessibilité ou de revisite.

Un autre but de l'invention est de proposer un satellite qui soit d'une structure simplifiée, permettant notamment une réduction importante des coûts de l'antenne, du lanceur et du module de servitude, ainsi qu'une augmentation de fiabilité et de durée de vie.

A cet effet, l'invention propose un satellite d'observation ou de télécommunication à orbite basse comportant un élément formant antenne(s) de forme générale plane, caractérisé en ce que l'élément formant antenne(s) s'étend sensiblement dans un plan passant par le centre de la terre, notamment dans son plan d'orbite.

De façon préférée, le satellite comporte un générateur solaire et les cellules du générateur solaire sont portées par l'élément formant antenne(s).

Le satellite proposé par l'invention est avantageusement tel que la hauteur de l'élément formant antenne(s) définie par la dimension le long de l'axe de gravité est supérieure à sa dimension perpendiculaire, de sorte que ledit satellite est naturellement stabilisé par gradient de gravité sur les axes roulis et tangage.

En particulier, l'élément formant antenne(s) peut avantageusement comporter une partie non fonctionnelle en terme d'antenne, éventuellement partiellement creuse, qui concoure à stabiliser naturellement ledit satellite par gradient de gravité sur les axes de roulis et tangage.

De façon préférée également, le satellite comporte un élément formant antenne(s) de forme générale plane, et est caractérisé en ce que l'élément formant antenne(s) présente une géométrie déformable et comporte des moyens de contrôle de l'onde émise ou reçue répartis sur sa surface et en ce qu'il comporte une pluralité de capteurs de positionnement et/ou déformation et/ou de désalignement répartis sur ledit élément formant antenne(s) et permettant la mesure des déformations et/ou désalignements puis leur compensation au niveau des moyens de contrôle.

Les capteurs sont avantageusement des capteurs de radio-positionnement, terrestres ou satellitaires, notamment GPS, qui permettent également la mesure, puis la compensation au niveau des moyens de contrôle, des erreurs d'attitude absolue.

Selon un autre aspect, il est également proposé une configuration de lancement d'un satellite d'observation ou de télécommunication selon l'invention comportant au moins un élément plan constitué d'une pluralité de panneaux articulés les uns sur les autres, tel qu'un élément formant antennes, ainsi que des équipements associés ou de servitudes, caractérisée en ce que ledit satellite comporte une enveloppe porteuse qui intègre en son intérieur au lancement les équipements et les panneaux et qui présente une trappe pyrotechnique pour le déploiement des panneaux.

Selon une première variante avantageuse, l'enveloppe porteuse comporte deux demi-coques, l'une qui intègre les différents équipements associés et de servitude, l'autre qui porte une couture pyrotechnique délimitant une trappe à deux volets et dont l'explosion matérialise et éjecte les deux volets qui restent ensuite retenus en position ouverte par deux charnières situées le long de l'interface avec la première demi-coque, de sorte que les panneaux puissent être stockés au lancement dans le logement défini entre les coques et déployés ensuite d'un seul côté du satellite à travers la trappe.

Selon une autre variante possible, l'enveloppe porteuse est constituée de deux coques assemblées sur une partie médiane, la partie médiane intégrant les différents équipements associés et de servitude, tandis que chacune des coques latérales porte une couture pyrotechnique délimitant une trappe à deux volets et dont l'explosion matérialise et éjecte les deux volets qui restent ensuite retenus en position ouverte par deux charnières portées sur cette même demi-coque et situées le long de l'interface avec la partie médiane, de sorte que les panneaux puissent être stockés au lancement dans les deux logements définis entre chacune des coques latérales et la partie médiane et déployés ensuite de chaque côté du satellite au travers de la trappe correspondante.

Un satellite qui présente ces différentes caractéristiques seules ou en combinaison, est avantageusement complété par les différentes caractéristiques suivantes, prises également seules ou selon toutes leurs combinaisons techniquement possibles :
- l'élément formant antenne(s) dispose de fonctions d'antenne sur ses deux faces ;
- une partie de l'élément formant antenne(s) ne porte pas de cellules solaires et fait fonction d'antenne sur les deux faces ;
- il comporte des moyens de traitement différentiel des mesures de phases sur des signaux de radio-positionnement fournies par chaque capteur pour la mesure des positionnements relatifs des capteurs ainsi que de l'attitude absolue du plan moyen défini par ces capteurs ;
- il comporte un module de servitude qui intercepte le plan de l'orbite et l'élément formant antenne(s) est situé d'un seul côté dudit module de servitude ;
- il comporte un module de servitude qui intercepte le plan de l'orbite et l'élément formant antenne(s) s'étend de part et d'autre du module de servitude ;
- les deux parties de l'élément formant antenne sont dans deux plans distincts dont l'intersection passe par le centre de la terre ;
- il comporte un module de servitude dont le centre de gravité est placé sur l'axe de petite inertie de l'élément formant antenne(s), de sorte que l'équilibre naturel par gradient de gravité le long de la verticale locale de l'élément formant antenne(s) est conforté et que les couples de pression solaires sur le satellite sont limités ;
- il permet d'assurer d'un part pour la ou les antennes de l'élément une occultation minimale par le module de servitude, et d'autre part pour les capteurs de radiopositionnement, un écart angulaire par rapport à la normale à l'élément de la direction de réception des signaux de radiopositionnement en deça duquel il n'y a pas de trajet multiple par réflexion sur le module et au delà duquel les signaux ne sont pas considérés ;
- les cellules solaires permettent de couvrir les besoins énergétiques d'au moins une antenne de l'élément formant antenne(s) ;
- une partie de l'élément formant antenne(s) est non fonctionnelle en terme d'antenne et porte des cellules solaires ;
- les cellules solaires, qui permettent de couvrir les besoins énergétiques de l'antenne précitée, sont disposées au dos de ladite antenne, ainsi qu'éventuellement sur des espaces non fonctionnels en terme d'antenne disposés de part et d'autre de ladite antenne ;
- les cellules solaires de l'élément formant antenne(s) permettent de couvrir les besoins énergétiques de celui-ci ;
- la (ou les) parties non fonctionnelles en terme d'antenne qui porte(nt) des cellules solaires assurent au moins l'alimentation du module de servitude hors des éclipses ;
- une antenne présente un maillage d'unités électroniques élémentaires de surface, chaque unité élémentaire étant couplée et pourvue directement par un pavé d'une ou plusieurs cellules solaires ;
- le pavé de cellule(s) solaire(s) est placé directement au regard de l'unité élémentaire ;
- les cellules solaires sont des cellules de technologie AsGa ou silicium ;
- l'élément formant antenne(s) comporte plusieurs antennes distinctes de fréquences identiques ou différentes, juxtaposées le long de l'axe de gravité ;
- l'élément formant antenne(s) comporte deux antennes à la même fréquence permettant une observation radar interférométrique, lesdites antennes étant séparées le long de l'axe de la verticale locale ;
- pendant la phase de lancement, les panneaux sont repliés en étant plaqués sur un plateau sur lequel ils sont accrochés par des tirants ;
- chaque panneau est traversé par au moins un manchon destiné à être traversé par un tirant pour sa fixation sur le plateau ;
- l'axe de plus petite inertie de l'enveloppe porteuse et des différents panneaux est orienté au lancement le long de l'axe lanceur et l'axe de déploiement est normal à l'axe du lanceur ;
- la forme extérieure en configuration de lancement de l'enveloppe porteuse est ajustée aérodynamiquement de façon à remplacer la coiffe de lancement ;
- l'enveloppe porteuse et les éléments associés et de servitude constituent le module de servitude, l'axe de plus petite inertie de ce dernier étant parallèle au plan de l'orbite ;
- le déploiement est réalisé selon la verticale ;
- un panneau présente une structure empilée qui comporte éventuellement un radôme, un panneau rayonnant, une structure intermédiaire en NIDA porteuse d'équipements électroniques, éventuellement une couche de protection thermique, une plaque qui porte les cellules solaires, et/ou des éléments rayonnants, le panneau comportant en outre des raidisseurs posés sur la structure intermédiaire et porteurs de la (ou des) plaque(s) qui porte(nt) les cellules solaires et/ou des éléments rayonnants ;
- un manchon est disposé au voisinage du croisement entre deux raidisseurs ;
- l'ensemble des portions de l'élément qui diffère de part leur fonction d'antenne ou de part la présence ou non de fonction d'antenne sont distribuées le long de l'axe de déploiement des panneaux de sorte que chacun des panneaux réalise une grande homogénéité fonctionnelle ;
- l'alimentation de la distribution hyperfréquence se fait en chaîne en partant depuis le côté de l'élément formant antenne opposé à l'astre autour duquel le satellite est en orbite, la chaîne de câble constituant une partie des lignes à retard nécessaires
- le satellite comporte selon la hauteur de l'antenne un réseau de points pour le contrôle en élévation du diagramme de l'antenne, en ce que le diagramme élémentaire en élévation de la portion d'antenne associée à chaque point de contrôle est orienté de manière fixe pour couvrir le domaine d'incidence utile, et en ce que l'espacement entre ces points le long de la hauteur H est tel que des lobes parasites liés au réseau existent lors du dépointage de lobe principal par rapport à la direction visée par le diagramme élémentaire mais que la modulation du gain de ces lobes parasites exercée par le diagramme élémentaire garantit un gain très faible pour ceux qui rencontreraient la terre et préserve un gain minimal sur le lobe principal ;
- la portion élémentaire d'antenne associée à chaque point de contrôle est constituée par regroupement en parallèle depuis un même point de contrôle et selon la hauteur de plusieurs éléments rayonnants et en ce qu'un profil de déphasage selon une rampe fixe et constante est introduit entre les éléments rayonnants d'un même point de contrôle.

D'autres caractéristiques et avantages de l'invention ressortiront encore de la description qui suit. Cette description est purement illustrative et non limitative.

### PRESENTATION DES FIGURES

- la figure 1, déjà analysée, illustre une représentation schématique d'un satellite d'observation conforme à un art antérieur connu ;
- la figure 2 illustre l'orientation du satellite de la figure 1 sur son orbite héliosynchrone autour de la terre à l'heure locale 6 H/18 H, dans le cas d'une antenne dans le plan de l'orbite ;
- la figure 3 illustre schématiquement l'orientation de l'antenne du satellite des figures 1 et 2 ;
- la figure 4 est une représentation schématique de côté d'un satellite conforme à un mode de réalisation possible pour l'invention dans le cas d'une orbite héliosynchrone 6 H/18 H et d'une antenne dans le plan de l'orbite ;
- la figure 5 est une vue de face du satellite de la figure 4 ;
- la figure 6 illustre le diagramme en élévation de la portion élémentaire d'antenne associée à un point de contrôle ;
- la figure 7 décrit un mode de réalisation possible permettant d'obtenir le diagramme de la figure 6 ;
- la figure 8 est une représentation en perspective d'un satellite conforme à un mode de réalisation possible pour l'invention ;
- la figure 9 est une représentation partielle schématique en coupe d'un satellite conforme à un mode de réalisation possible pour l'invention ;
- la figure 10 est une représentation schématique en coupe de la configuration de lancement du satellite de la figure 9 ;
- la figure 11 est une vue en coupe selon la ligne XI-XI de la figure 10 ;
- la figure 12 est une représentation en coupe d'un panneau d'un satellite conforme à un mode de réalisation possible pour l'invention ;
- la figure 13 est une vue de dessus du panneau de la figure 12 ;
- la figure 14 est une vue en coupe d'un détail du panneau des figures 12 et 13.

### DESCRIPTION DETAILLEE DE L'INVENTION

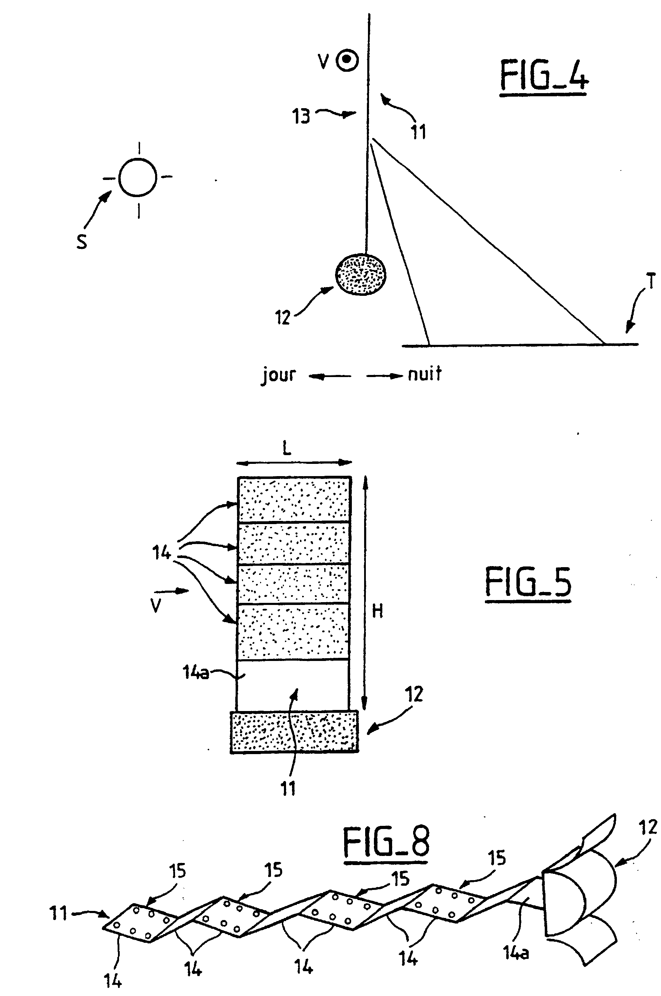

Sur les figures 4 et suivantes, on a référencé par 12 le module de servitude du satellite conforme à l'invention qui y est représenté. Les références 11 et 13 désignent respectivement l'élément formant antenne(s) et les cellules du générateur solaire.

Le satellite illustré sur ces figures est remarquable en différents aspects.

Son orbite est une orbite basse et l'élément 11 formant antenne(s) s'étend sensiblement dans un plan passant par le centre de la terre (angle roulis r de 90°).

Il a la capacité éventuelle de rayonner sur ses deux faces.

Par ailleurs, la hauteur H de cet élément 11, définie par sa dimension le long de l'axe de gravité, est soit naturellement très supérieure à sa dimension L dans sa direction perpendiculaire (direction du vecteur vitesse V sur les figures 4 et 5 qui illustrent le cas où le plan du satellite est confondu avec le plan de son orbite) soit complétée selon la hauteur H par une surface ne formant pas antenne, éventuellement partiellement creuse, de sorte que le satellite est naturellement stabilisé par gradient de gravité.

Egalement, les cellules solaires 13 sont disposées sur une face de l'élément 11 formant antenne(s), éventuellement les deux.

En outre, l'élément 11 comporte répartis sur sa surface des points de contrôle en phase et en amplitude de l'onde émise ou reçue.

Il tolère une structure souple dont les déformées et les erreurs d'attitude absolue sont mesurées à partir d'un traitement des mesures de phases fournies par des capteurs GPS répartis sur sa surface et compensées ensuite par les moyens de contrôle.

Ces différents aspects, ainsi que d'autres, vont maintenant être décrits de façon détaillée.

### ELEMENT 11 FORMANT ANTENNE(S) DANS LE PLAN DE L'ORBITE BASSE DU SATELLITE

Par orbite basse, on entend une orbite généralement inférieure à 2000 km.

Pour un même domaine d'incidence visé, le dépointage électronique du faisceau en élévation, c'est-à-dire autour d'un axe dans le plan de l'antenne et normal à l'axe de gravité, doit être accru par rapport à une antenne de l'art antérieur, ce qui conduit, par rapport à cet art antérieur, sous la contrainte de non apparition de lobes parasites liés au réseau d'éléments rayonnants, à resserrer l'espacement entre éléments rayonnants (environ 0,5 fois la longueur d'onde au lieu de 0,7 fois la longueur d'onde).

Toutefois, l'angle de dépointage maximum de la ou des antennes de l'élément 11 correspond désormais aux distances de propagation minimales (faibles incidences), ce qui permet de relâcher les exigences de faibles pertes classiquement imposées aux éléments rayonnants dans les forts dépointages et ainsi de conserver des technologies d'éléments rayonnants similaires au cas de la géométrie standard.

En outre, comme précisé dans le chapitre suivant, la configuration de satellite telle que proposé permet, grâce à sa tolérance aux lobes de réseau de contrôle, d'augmenter l'espacement le long de la hauteur H de l'antenne des points qui contrôlent le diagramme en élévation de l'antenne, jusqu'à 2 λ, voire 2,5 λ, alors que dans l'état de l'art antérieur d'une antenne inclinée à moins de 30 ou 35°, il est nécessaire de se limiter à environ 0,7 λ.

Il résulte de tout ceci un relâchement de la densité d'électronique le long de la hauteur dans un rapport pouvant aller jusqu'à 2/0,7 soit 2,85.

Par ailleurs sur le plan du bilan de liaison, l'accroissement de distance avec l'incidence peut se trouver désormais largement compensée par l'augmentation de la hauteur efficace de l'antenne dans la direction visée (réduction du dépointage). notamment, pour le cas d'un radar, la sensibilité de la mesure s'améliore avec l'incidence, tout comme l'exigence des phénomènes géophysiques à mesurer, alors que l'art antérieur fournit classiquement des profils de sensibilité inversés.

Toujours par rapport à l'art antérieur d'une antenne inclinée à 30° ou 35°, l'obtention à une incidence donnée d'un même faisceau d'antenne et donc d'une même hauteur efficace requiert une hauteur d'antenne accrue dans une proportion qui varie inversement avec l'incidence (10 % seulement à 60°). Comme, notamment en radar, l'extension du domaine d'incidence vers les hautes incidences conditionne l'obtention des performances opérationnelles d'accessibilité ou de revisite (délai mis par le satellite pour arriver en visibilité d'antenne sur un point ou pour revenir sur ce point), l'handicap de hauteur d'antenne est très faible, notamment pour les systèmes très performants permettant une incidence maximale supérieure à 60°.

La complexité, la masse et le coût de l'antenne réseau (surtout s'il s'agit d'une antenne active) étant principalement dictés par le nombre total de points de contrôle, on voit donc que le nouveau concept est très favorable car il permet une réduction de ce nombre dans un rapport pouvant aller jusqu'à 2,85/1,1 soit 2,7 environ, (pour un système couvrant les fortes incidences).

Contrairement à l'art antérieur, on dispose sur l'élément 11 de deux faces géométriquement équivalentes pour placer les éléments rayonnants de l'antenne. En utilisant simultanément les deux faces, on peut doubler le domaine d'incidence au grand bénéfice des performances opérationnelles qui, déjà très bonnes dès lors que l'on couvre les fortes incidences, deviennent ainsi exceptionnelles. Ceci peut être obtenu par la seule duplication des éléments rayonnants, en réutilisant la même structure bien sûr, mais aussi les mêmes équipements électroniques qui sont partie intégrante d'une antenne à balayage électronique, alors que dans l'art antérieur, cette duplication de grands domaines d'incidence exige une duplication totale d'antenne avec deux angles roulis opposés.

Le module 12 peut également être dans le plan de 5 l'élément 11, par exemple sous l'antenne.

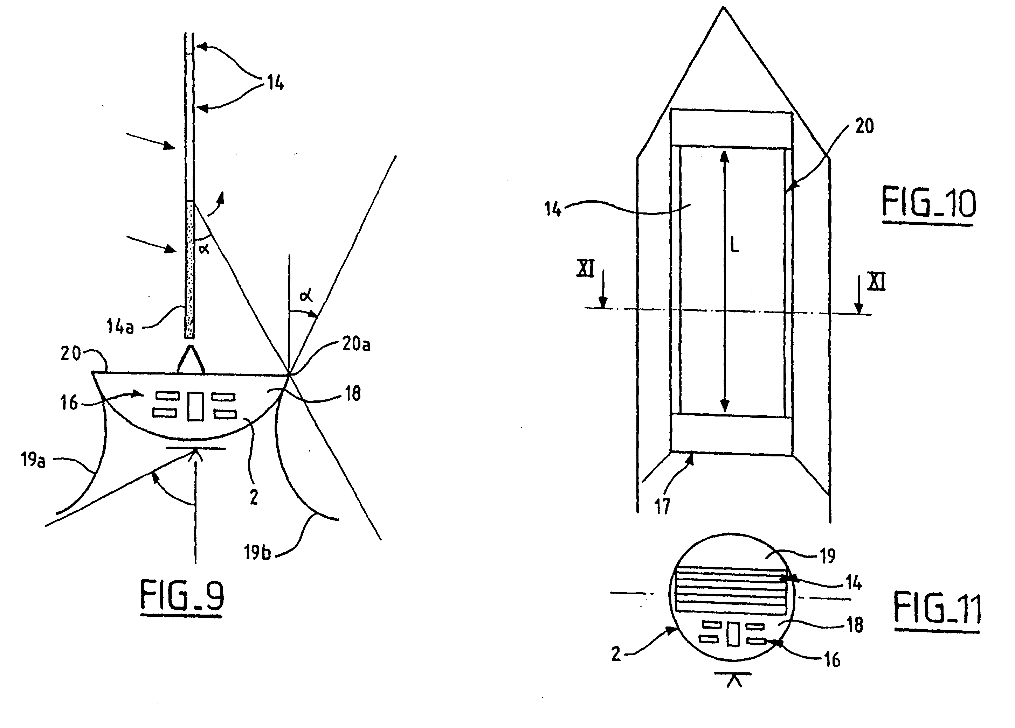

Dans ce cas, l'élément 11 comporte avantageusement à sa base du côté du module 12 un panneau 14a ne formant pas antenne (voir figure 9), éventuellement creux, et dont l'une des fonctions est de dégager à faible incidence le champ de vue des antennes proprement dites vis-à-vis du module de servitude 12.

On notera que ce qui précède s'applique de façor analogue aux satellites de communication.

Par ailleurs, sur les figures, l'élément formant antenne 11 est représenté situé d'un seul côté du module de servitude 12. Il peut bien entendu également s'étendre de part et d'autre du module de servitude 12, bien que la présence d'antennes en dessous du module 12 nécessite un aménagement particulier des moyens de télémesure.

### ESPACEMENT DES POINTS DE CONTROLE DE L'ANTENNE

L'espacement des points de contrôle selon la hauteur H de l'antenne 11 détermine la configuration des lobes parasites du réseau de contrôle lorsque le lobe principal - c'est à dire le lobe utile - est dépointé en élévation. Les gains du lobe principal et des lobes parasites sont modulés lors du dépointage, par le diagramme fixe de rayonnement en élévation de la portion d'antenne élémentaire rattachée à un point de contrôle.

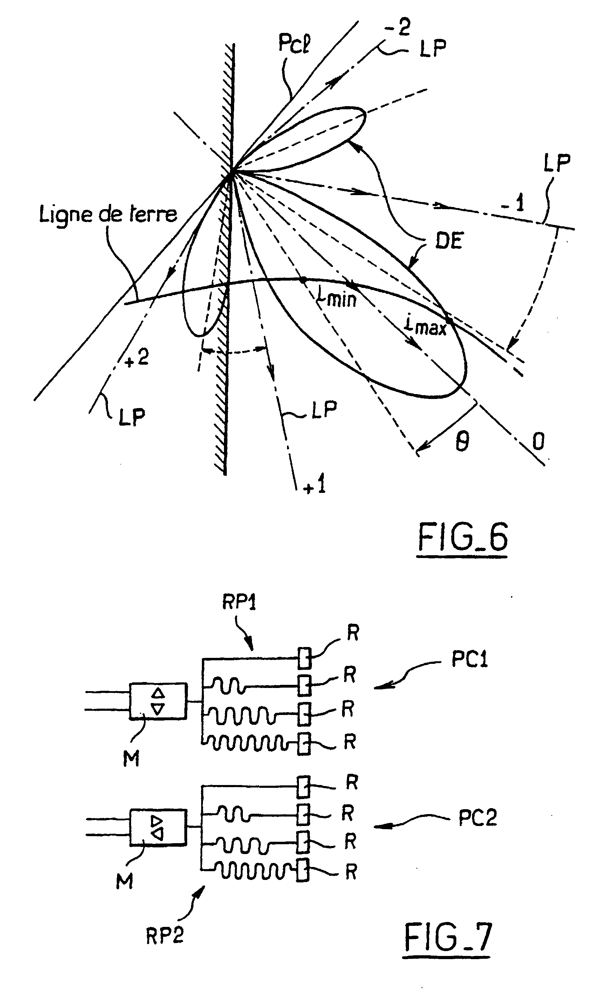

La figure 6 représente une configuration combinée de lobes parasites et de diagramme de portion élémentaire, obtenue à partir d'une antenne classique (dont le plan Pcl correspond à un angle de roulis inférieur à 30 ou 35°) et dont l'espacement entre points de contrôle est relâché.

Le diagramme de la portion élémentaire (formes pleines spatulées DE sur la figure 6) admet un pétale principal normal au plan d'antenne et orienté sur le domaine d'incidence utile. Les droites fléchées indiquent les positions des lobes parasites (LP) en absence de dépointage θ du lobe principal par rapport à l'axe principal du diagramme de la portion élémentaire qui est ici la normale à l'antenne. Les droites pointillées indiquent ces mêmes positions après un dépointage θ. Sans dépointage, les lobes parasites sont rendus inexistants car tombent dans les trous du diagramme de la portion élémentaire. Les lobes parasites et les pétales du diagramme de la portion élémentaire sont d'autant plus rapprochés que l'espacement des points de contrôles du diagramme le long de l'antenne est grand.

Sur la figure 6, on a aussi représenté la ligne de terre.

Pour un fonctionnement correct, deux conditions doivent être remplies lors du balayage θ le long du domaine d'incidence.

Aucun lobe parasite ne doit rencontrer l'horizon ou alors avec un gain très faible (- 30 à - 40 dB en dessous du gain du lobe principal), afin de ne pas affecter le niveau d'ambiguïtés.

Le gain du lobe principal (indiqué par 0 sur le dessin) ne doit pas descendre trop bas afin de ne pas affecter le bilan de liaison.

Dans le cas des satellites de l'art antérieur dont les antennes présentent un angle de roulis inférieur à 30 ou 35°, si les lobes -1 et +1 ne sont pas repoussés à proximité immédiate du plan d'antenne ou au-delà, par un choix suffisamment petit de l'espacement entre point de contrôles, il n'y a pas de solution, car on atteint très vite une valeur θ amenant des lobes parasites (+1, +2, ..., +N) tournés à fort gain vers la terre.

Par contre, la même configuration telle que représentée avec des lobes parasites et des pétales de diagramme de portion élémentaire resserrés, obtenue à partir d'une antenne répondant à la nouvelle géométrie, permet de répondre au problème. Dans ce cas, en effet, la partie à fort gain des lobes parasites +1, +2, +n est irréelle car située derrière l'antenne. On tire profit ici du fait que le champ de vue terrestre offert par la géométrie d'antenne entoure étroitement le champ de vue à imager.

De plus, si on associe cette géométrie d'antenne avec le reste de l'architecture proposée pour le satellite, cette frontière physique de protection contre les lobes parasites est avancée en avant de l'antenne car les très faibles incidences sont masquées par le module de servitude 12 sans que cela puisse générer des ambiguïtés car le signal réfléchi par le module est reçu pendant l'émission.

Il suffit avec la nouvelle géométrie d'antenne, de s'assurer de la non rencontre du lobe parasite -1 avec l'horizon quand on dépointe vers les incidences minimum, et de respecter une chute maximale de gain sur le lobe principal. En maintenant le lobe -1 sur la ligne d'horizon, la diminution de l'espacement entre points de contrôles fixe en regard du lobe 0 la limite d'incidence basse utilisable.

En calant par ailleurs le diagramme de la portion élémentaire dans une direction médiane entre la ligne d'horizon et l'incidence minimum, on garantit une chute minimale de 3,7 dB sur l'incidence minimale et une chute bien moindre aux fortes incidences si ces dernières sont en retrait par rapport à la ligne d'horizon. Cette chute est admissible car le nouveau concept de satellite est souvent excédentaire sur le plan énergétique. Si ce n'est pas le cas, il faut se mettre en retrait par rapport à cet espacement ultime ou bien admettre de rehausser la limite basse d'incidence.

On peut ainsi avec la nouvelle géométrie relâcher l'espacement entre points de contrôle jusqu'à 2 λ (voire même 2,5 λ suivant les condition d'altitude et de domaine d'incidence), alors que dans la géométrie classique avec antenne inclinée à moins de 30 ou 35°, cet espacement reste inférieur à 0,7 ou 0,75 λ, c'est-à-dire que le pas de contrôle doit être confondu avec le pas des éléments rayonnants (un point de contrôle par élément rayonnant).

L'obtention à partir d'une antenne répondant à la nouvelle géométrie, d'un tel diagramme de portion élémentaire dont le pétale principal est dépointé par rapport à la normale de l'antenne pour viser le domaine utile d'incidence, peut être obtenue en constituant la portion élémentaire par regroupement de plusieurs éléments rayonnants à diagramme élémentaire très ouvert et subissant entre eux un déphasage selon une rampe (selon la hauteur) de phase fixe.

C'est ce que l'on a illustré sur la figure 7 sur laquelle les éléments rayonnants R commandés par deux points de contrôle successifs PC1 et PC2 ont été illustrés. La rampe de phase fixe et identique pour tous les PC est par exemple réalisée par la progressivité des longueurs de câble entre le module M de déphasage/émission/réception et les éléments R.

On pourrait aussi avec cette nouvelle géométrie, relâcher le pas entre éléments rayonnants, quitte à faire apparaître des lobes parasites du réseau d'élément rayonnant et à introduire de nouvelles pertes sur le lobe principal (à faible incidence). Mais puisque ce pas est désormais dissocié de celui des points de contrôle, et ne conditionne donc plus la densité électronique de l'antenne, il est préférable d'adopter un espacement (proche de 0,5 λ) excluant cet autre type de lobes parasite.

### REGROUPEMENT DE PLUSIEURS PORTIONS D'ANTENNE ELEMENTAIRES PAR SECTION A RETARD COMMANDE

Les signaux émis de chacune des portions d'antennes élémentaires sont tous issus d'un même signal source après adaptation spécifique de phase, d'amplitude et également de retard temporel. Cette adaptation de retard permet de garantir un délai temporel de la source vers le point visé au sol indépendant de la portion d'antenne transitée. De même lors de la réception, la recombinaison des différents signaux dans un seul se fait après adaptation spécifique de phase, d'amplitude et également de retard temporel. L'adaptation de retard en réception permet d'assurer un délai temporel du point visé au sol vers le point de recombinaison des signaux indépendant de la portion d'antenne transitée. Une différence de délais a deux effets, l'un consiste à étaler la réponse impulsionnelle distance (pour un RADAR), l'autre consiste à introduire un balayage parasite en élévation du faisceau suivant les composantes fréquentielles du signal.

Lorsque le plan d'antenne est normal à la direction visée, la condition temporelle est vérifiée si la distribution des signaux vers (et depuis) les portions élémentaires d'antennes se fait à équilongueur de câble. Dans le cas contraire, en particulier lorsque la direction de visée est commandable par dépointage électronique, il faut introduire des lignes à retard programmables pour moduler les longueurs de distribution des signaux à l'intérieur de l'antenne de façon à maintenir l'indépendance du trajet total jusqu'au point visé (et depuis le point visé). Dans un souci de réduction du nombre de lignes à retard programmables, on admet de regrouper plusieurs portions d'antenne dans une même section à retard commandé. Il en résulte une désynchronisation résiduelle limitée à l'échelle de la section, d'amplitude croissante avec l'étendue de la section et l'angle de dépointage avec la normale à l'antenne.

La nouvelle géométrie d'antenne pourrait être pénalisante en termes de nombre de sections à retard commandé du fait du fort dépointage en élévation. Mais, ce dépointage est réalisé autour d'une valeur moyenne non nulle, il suffit alors d'introduire en fixe à l'intérieur de la section l'adaptation de longueurs correspondant au cas de ce dépointage moyen pour ne lier les effets résiduels qu'au dépointage incrémental de part et d'autre du dépointage moyen et pouvoir ainsi accroître largement l'étendue de la section. Tous se passe à peu près comme si l'antenne était physiquement dépointée dans la direction moyenne.

### STABILISATION PAR GRADIENT DE GRAVITE

Etant donné que la hauteur H de l'élément 11 est très supérieure à sa dimension L - en étant éventuellement rendue telle par l'extension non fonctionnelle 14a - l'axe de plus petite inertie dudit satellite se trouve dans sa position d'équilibre naturel, dès lors que l'élément 11 est désiré dans un plan passant par le centre de la terre, par exemple confondu avec le plan de son orbite.

Il en résulte une stabilisation en roulis et tangage du satellite par gradient de gravité.

Les dimensions de l'élément 11 formant antenne permettent un couple de rappel naturel contre les perturbations en tangage ou roulis attendues en orbite.

La position du module de servitude 12 dans l'alignement de l'élément 11 est non perturbatrice et contribue même par sa forte densité à accroître le couple de rappel basé sur la différence entre la grande et la petite inertie de l'ensemble.

La partie 14a ne formant pas antenne, même partiellement creuse, peut être ajustée pour obtenir les conditions de gradient de gravité en cas d'insuffisance du couple de rappel dû au gradient de gravité, notamment en cas d'insuffisance la hauteur H.

Ce couple de rappel est efficace face aux perturbations en roulis et en tangage, mais ne compense aucunement les perturbations par rapport à l'axe de lacet.

Le contrôle en lacet est réalisé par le système de contrôle d'attitude et d'orbite du module 12.

Le rôle de celui-ci quant aux perturbations en roulis et tangage est simplifié par rapport à son rôle habituel, puisqu'il peut se borner à amortir les effets pendulaires du rappel du gradient.

Le principal couple parasite permanent en lacet est dû à la pression solaire.

On notera que la configuration d'une très grande homogénéité du satellite illustrée sur les figures favorise largement la limitation de la cause de ce couple parasite, à savoir le décalage le long du vecteur vitesse des centres de gravité et de poussée.

### CELLULES SOLAIRES 13 SUR UNE OU LES DEUX FACES DE L'ELEMENT 11 FORMANT ANTENNE

L'antenne du satellite est de préférence dans le plan de l'orbite et l'orbite du satellite est de préférence héliosynchrone, de façon à préserver un angle d'aspect solaire minimal avec les cellules solaires placées sur une face particulière de l'élément 11 formant antenne. La face antenne occupe alors la face ombrée de l'élément 11 et peut également occuper l'autre face sur des parties non occupées par les cellules solaires. une heure locale 6 H ou 18 H est optimale car l'écart angulaire est limité aux environs de 30° (effet cumulé de l'inclinaison de l'orbite et de l'ascension du soleil). Mais toutefois, la grande surface de cellules solaires ainsi réalisable permet d'envisager des écarts plus importants par rapport au plan d'orbite 6 H/18 H.

Bien que l'héliosynchronisme à heure locale figée facilite la conception thermique de l'élément 11, le satellite peut aussi être conçu pour pouvoir changer d'heure locale y compris de part et d'autre du plan 12/24 H, ou même fonctionner avec une heure locale dérivante (plus d'héliosynchronisme mais orbite toujours inclinée). Il suffit pour cela que les deux faces de l'élément 11 disposent d'espace couvert de cellules solaires au prix d'un accroissement de la surface totale de cellules solaires. Il est certain toutefois que le fonctionnement ne pourra être assuré, chaque fois que l'heure locale est proche de 12 H/ 24 H.

La densité des cellules solaires 13 au dos de l'élément 11 peut être choisie de façon à couvrir les besoins énergétiques de ladite antenne, sans aucun relais de batterie. Au besoin, l'élément 11 peut inclure des portions ne formant pas antenne, mais portant des cellules solaires.

Ainsi, la réutilisation de la structure mécanique de l'élément 11 permet déjà d'obtenir un générateur solaire très puissant, voire même bien plus puissant que ceux accompagnant les modules de servitude standard les plus performants, elle permet en outre la simplification à l'extrême du sous système d'alimentation du module de servitude 12 lorsque ce dernier n'a plus qu'à prendre en charge ses propres besoins.

Chaque équipement ou groupe d'équipement de l'élément 11 peut être en effet couplé directement à sa source énergétique de sorte que les fonctions de transport et de conversion énergétiques sont simplifiées et ne mettent plus en jeu le module de servitude 12, ni même une liaison avec ce dernier.

Ce principe d'autonomie énergétique trouve un intérêt plus grand encore dans le cas d'une antenne ou d'antennes actives qui réalisent déjà un maillage électronique important, c'est à dire une décomposition en unités électroniques identiques obéissant à des critères de production et test en série. Il suffit d'intégrer à ces unités les cellules solaires et les fonctions de conversion et de stockage (éventuellement une simple capacité électrique) d'énergie, marginales par rapport aux autres fonctions. Cette approche de maillage intégral exclut le fonctionnement antenne des deux côtés, celui-ci doit être obtenu par duplication et disposition inverse d'au moins une partie de l'antenne. Il va de soi que cette duplication réalisée suivant le sens de la hauteur peut accessoirement aussi servir d'accroissement de gradient de gravité et réduire la nécessite des espaces ne formant pas antenne mentionnés.

Le principe d'autonomie énergétique de l'antenne sans recours aux batteries centralisées exclut le fonctionnement en éclipses et est donc plutôt à envisager pour une heure locale de 18 H (ou 6 H) montante, pour laquelle l'éclipse n'intervient que durant moins de 20 % de l'orbite et qu'au pôle sud (ou nord) pendant quelques mois de l'année, ce qui est sans pénalisation pour la plupart des missions.

Par contre, en dehors des éclipses, le fonctionnement est permanent.

Il en résulte un intérêt opérationnel. En outre, les électroniques et cellules sont soumises à un faible cyclage thermique. On gagne ainsi en dimensionnement thermique, fiabilité et en durée de vie.

Ce qui précède peut aussi s'appliquer au cas où le plan contenant l'élément 11 n'est pas situé dans le plan de l'orbite mais contient seulement le centre de la terre. L'adoption d'un décalage en lacet, éventuellement variable le long de l'orbite, du plan de l'élément 11 par rapport à celui de l'orbite peut apporter un degré de liberté supplémentaire pour optimiser l'éclairement solaire, en particulier dans les cas d'orbite non calée à 6H/18H ou même non-héliosynchrone.

### ELEMENT 11 FORMANT ANTENNE DEFORMABLE (OU SOUPLE) ET CAPTEURS GPS

Ainsi qu'on l'a illustré plus particulièrement sur les figures 7 et 8, l'élément 11 est constitué d'une pluralité de panneaux 14 articulés les uns sur les autres et grossièrement alignés, lorsqu'ils sont déployés, sur le plan moyen de l'élément 11. Le déploiement est réalisé le long de la hauteur H de l'élément 11. Ces différents panneaux 14 sont repliés dans le module de servitude 12 lors du lancement.

Les mécanismes associés aux panneaux sont dimensionnés au minimum pour assurer le déploiement, et une fois l'attitude nominale acquise, un alignement grossier (écart de positionnement de 10 cm sur une hauteur de 10 à 15 m voire plus entre les deux panneaux extrêmes, écart de 1 cm entre deux panneaux consécutifs).

En phase de routine ou déployée, les efforts qu'ils doivent transmettre sont très faibles et limités aux réactions des couples de gradient de gravité, de pression solaire, ainsi que de contrôle d'attitude (exercé par le module de servitude). Ces perturbations interviennent à la pulsation orbitale et peuvent donc être facilement découplées des modes propres de l'élément 11, tout en maintenant ces derniers suffisamment lent pour permettre la mesure des déformations et écarts ainsi que leur prise en compte par les moyens de contrôle de l'onde émise ou reçue.

Les efforts transitoires lors des poussées et des compensations du contrôle d'attitude qui s'ensuivent, ainsi que lors de la phase initiale d'acquisition d'attitude sont plus importants mais peuvent autoriser des désalignements de plus grandes amplitudes (la mission est interrompue dans ces phases de poussées) réduits et amortis par les mécanismes et/ou les liaisons entre les panneaux.

Des capteurs GPS 15 sont répartis sur les différents panneaux 14.

Chacun des capteurs 15 comporte au minimum une antenne GPS, les fonctions de démodulation et mesure des signaux GPS pouvant être physiquement regroupées pour plusieurs capteurs, par exemple au niveau du panneau 14. L'ensemble des fonctions de démodulation et mesure des signaux GPS peut utiliser le même oscillateur par exemple situé dans le module de servitude 12.

La mesure du positionnement relatif de deux capteurs 15 de l'élément 11 est obtenue à partir des mesures interférométriques consistant en la différence de la mesure de phase entre les deux capteurs d'un signal issu d'un même satellite GPS. La mesure du positionnement relatif des deux capteurs 15 requiert au moins deux mesures interférométriques sur deux satellites distincts lorsque la distance entre capteurs est connue, au moins trois dans le cas contraire. Dans la pratique, on différencie chacune des mesures interférométriques par rapport à une mesure issue d'un satellite supplémentaire afin de s'affranchir des biais propres à chacune des bases de capteurs (principe de la double différence de phase).

De manière générale, il s'agit avec ces capteurs GPS, de mesurer la position relative des capteurs ainsi que l'attitude absolue du plan moyen qu'ils forment. Ceci peut être obtenu par traitement centralisé, par exemple au niveau du module de servitude 12, des mesures de phases issues des différents capteurs 15. On peut aussi, afin d'alléger la centralisation des données, définir une étape de traitement au niveau de chaque panneau 14 portant sur le positionnement relatif des capteurs 15 d'un même panneau 14, positionnement se résumant à l'attitude absolue dudit panneau si ce dernier n'est sujet à aucune déformation interne, et ne laisser à calculer au niveau du traitement centralisé que le positionnement relatif entre les capteurs de référence définis pour chacun des panneaux.

Chacun des panneaux 14 comprend un minimum de trois capteurs GPS 15, ce qui suffit en l'absence de déformations internes du panneau. La recherche d'allégement structural, peut conduire à laisser s'introduire des modes thermo-élastiques de déformation à l'intérieur des panneaux 14. Il faut au moins un capteur GPS 15 supplémentaire par panneau 14 pour mesurer ces déformations.

La géométrie quasi-plane du satellite réduit les sources de trajet multiple qui constituent la limitation principale du GPS pour le positionnement relatif précis. La seule source de trajet multiple est en effet le module de servitude 12 et cette dernière peut être éliminée au moins dans ses effets principaux.

En effet, comme indiqué précédemment, le ou les panneaux 14a reliés au module de servitude 12 ne forment pas antenne. Ils ne sont donc pas équipés de capteurs GPS. Comme illustré par la figure 9, pour éliminer les sources de trajet multiple sur les capteurs des autres panneaux 14, il suffit de ne pas considérer les satellites GPS reçus sous une incidence minimale. Cette dernière sera au moins inférieure à l'incidence minimale de travail du satellite (typiquement 25°) du fait de la fonction de dégagement de champs de vue exercée par ailleurs par tout ou partie des panneaux 14a. Ce masquage très limité laisse suffisamment de satellites pour opérer. Les trajets multiples deviennent ainsi limités à la diffraction par l'arrête 20a du plateau 20. Cette diffraction ne privilégie aucune direction particulière et ne peut donc en effet être masquée.

La compensation des déformations de l'élément 11, se réalise au niveau de chacune des unités de surfaces disposant d'un moyen de déphasage de l'onde émise ou reçue, le déphasage prend en compte le dépointage du faisceau par rapport au plan moyen ainsi que la position de l'unité de surface autour et dans ce plan moyen. Les positions des unités de surfaces sont obtenus à partir des positions des capteurs GPS voisins.

Tout comme le processus de mesure des déformations, le processus de compensation peut admettre une étape locale au niveau de chaque panneau. Le déphasage prend en compte un plan moyen au niveau du panneau ainsi que les dépointages et écarts de position afférents. Il y a lieu de rajouter de manière commune dans un même panneau un terme de phase correspondant à l'écart du point de référence du panneau par rapport au plan d'onde du faisceau résultant de toute l'antenne et passant par le point de référence d'un panneau de référence.

Moyennant les dispositions qui précèdent, notamment concernant les trajets multiples GPS, la compensation de planéité peut être réalisée à mieux qu'un millimètre et l'attitude du plan moyen peut être connue à mieux que 1/10ième de degré. Ceci répond parfaitement aux exigences d'une mission radar, y compris en haute fréquence (bande X) pour laquelle les exigences de planéités sont les plus sévères. Afin de conforter ces bilans dans le cas exigeant des hautes fréquences, il est préférable de placer les panneaux hautes fréquences à l'extrémité de l'élément 11 opposée par rapport au module 12 afin de réduire l'effet de ces trajets multiples résiduels issus du module 12. Cette disposition sera toujours possible puisque, comme indiqué plus loin, l'élément 11 ne sera jamais totalement constitué de panneaux haute fréquence (basse fréquence, panneaux 14a).

Bien entendu, la compensation à partir de mesures de phases de capteurs GPS s'applique de la même façon dans le cas où l'élément formant antenne est constitué d'un seul panneau susceptible de se déformer.

### MODULE DE SERVITUDE ET LANCEUR

On va maintenant décrire de façon plus détaillée le module de servitude 12.

Ce module de servitude 12 porte les différents équipements hors antenne, notamment l'électronique centrale du radar, des moyens mémoires pour le stockage des données images, des moyens de télémesure, ainsi que les différents équipements de servitude, dont le système de contrôle d'attitude et d'orbite qui comprend des magnétomètres, des magnétocoupleurs, un réservoir et une tuyère, et des moyens de télécommande et de gestion de bord.

Le module 12 comporte également une batterie, dont la capacité est réduite aux propres besoins de celui-ci dans le cas où l'on retient le principe d'autonomie énergétique de l'élément 11.

Ces différents équipements ont été référencés par 16 dans leur ensemble sur les figures 9 et 10.

Dans l'option d'autonomie énergétique de l'élément 11, le premier des panneaux 14a rattaché au module 12 porte un générateur solaire indépendant qui assure le fonctionnement du module de servitude 12 hors des éclipses. Pendant les éclipses, le générateur solaire est relayé par la batterie pour la rétention des informations stockées à bord et le fonctionnement des équipements de servitude. La batterie est également sollicitée lors de la mise à poste.

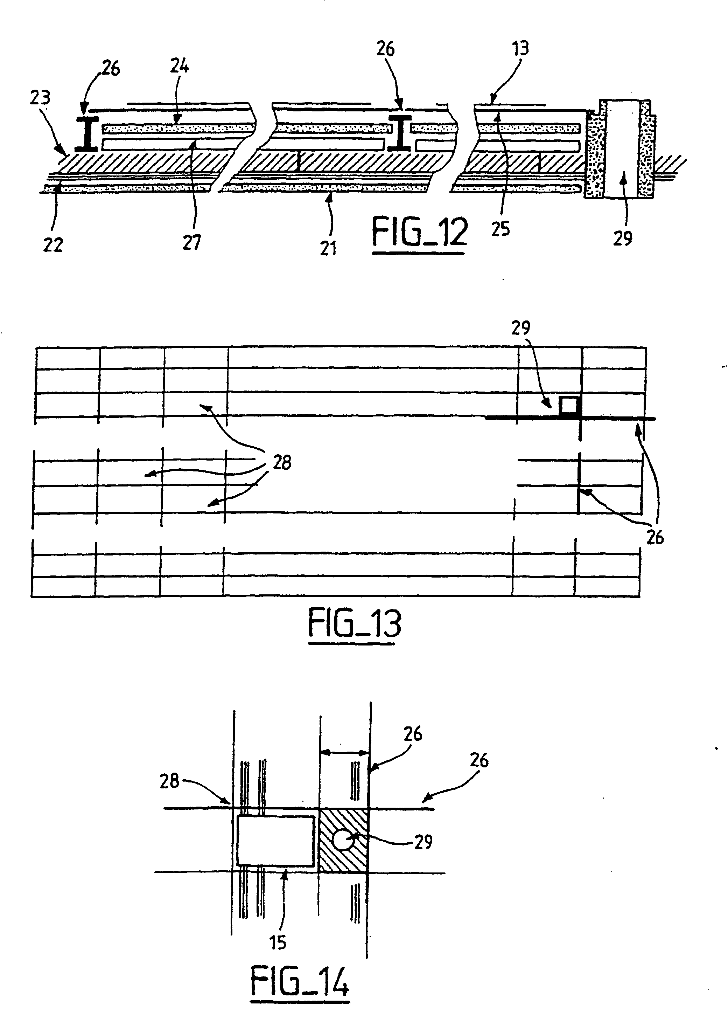

Ainsi qu'on l'a illustré sur les figures 10 et 11, le module de servitude 12 sert également à la tenue mécanique du paquet de panneaux 14 lors du lancement.

A cet effet, le module de servitude 12 est constitué d'une enveloppe porteuse de forme cylindrique, à l'intérieur de laquelle sont repliés les panneaux et qui présente une trappe pyrotechnique pour leur déploiement. Cette forme cylindrique prolonge l'interface circulaire 17 avec le lanceur et facilite la prise en compte des exigences de rigidité imposées par le lanceur. La dimension du satellite le long de l'axe lanceur correspond à la longueur L de l'élément 11. La longueur du cylindre est déterminée directement par la longueur L de l'antenne, tandis que le diamètre est contraint par la hauteur élémentaire d'un panneau 14.

L'enveloppe cylindrique est constituée de deux coques 18 et 19, assemblées après intégration du paquet de panneaux et des équipements du module de servitude 12. L'une 18 de ces coques intègre les différents équipements du nodule de servitude 12. L'autre coque 19 porte une couture pyrotechnique délimitant une trappe à deux volets. L'explosion de cette couture matérialise et éjecte les deux volets qui restent retenus en position ouverte par deux charnières portées par la coque 19 et situées le long de l'interface avec la coque 18.

Lors du lancement, les différents panneaux 14 sont repliés les uns sur les autres et plaqués sur un plateau 20, solidaire de la coque 18, à l'aide de tirants traversants l'ensemble des panneaux. L'autre face du plateau porte le reste des équipements du satellite.

Cette architecture permet une prise en compte aisée des différentes exigences de centrage des masses. Le centrage au lancement le long de l'axe lanceur, est obtenu par le décalage adéquate du plateau 20 par rapport au plan médian du cylindre, le cylindre étant lui-même centré sur l'axe lanceur. Les deux types de centrage en déployé, à savoir l'alignement du centre de gravité du module 12 à la fois dans le plan de l'antenne et à la verticale du milieu de l'antenne selon la direction L (confortation de l'alignement naturel par gradient de gravité de l'axe de plus petite inertie de l'élément 11 le long de la verticale locale et limitation des couples de pression solaire sur le satellite) sont obtenus par équilibrage des équipements sur le plateau 20.

La configuration ouverte des volets 19a et 19b, ne laisse aucune source de réflexion parasite de signaux GPS vers l'antenne 11 autre que le plateau 20, tout en laissant le champ de vue requis pour l'antenne de télémesure portée par la coque 18.

La forme cylindrique ainsi proposée pour le satellite en position de lancement permet aussi avantageusement de supprimer la coiffe du lanceur. L'adjonction d'un chapeau, la suppression du seul appendice externe constitué par l'antenne de télémesure grâce à l'adoption d'une antenne plaquée à la coque ou déployée en orbite, l'adjonction éventuelle à la base du cylindre d'une jupette recouvrant le raccordement au lanceur, permettent de reconstituer la configuration aérodynamique équivalente d'une coiffe. Cette option permet, en négociation avec le lanceur, d'augmenter la masse ainsi que l'encombrement maximal autorisé pour le satellite.

Dès lors que la longueur L peut rester inférieure à 5,5 m, elle est compatible avec des coiffes des petits lanceurs en projet (LLV3 de Lockeed Martin, DELTA-LITE de McDONNELL DOUGLAS) ou de celles de lanceurs moyens existants, tels que DELTA 2, si l'épaisseur de l'élément formant antenne 11 repliée et du module de servitude 12 reste compatible avec un diamètre inférieur à 2 m. Ceci est en particulier le cas pour une hauteur totale d'élément 11 formant antenne(s) inférieure à 13 m ou 15 mètres (8 ou 9 panneaux de hauteur 1,7 m). De telles dimensions d'antenne autorisent des missions qui, suivant une approche classique (avec une géométrie classique et un module de servitude standard), conduisent à des masses et des volumes supérieurs et donc à des lanceurs plus onéreux (ARIANE 5, ATLAS II AS).

### ARCHITECTURE GENERALE D'UN PANNEAU

L'architecture générale d'un panneau du satellite conforme à un mode de réalisation possible pour l'invention dans le cas d'un rayonnement d'un seul côté du panneau a été illustrée sur la figure 12.

Ce panneau présente une structure sandwich dans laquelle sont superposés éventuellement un radôme 21, un panneau rayonnant 22, une structure intermédiaire 23 de type NIDA (marque déposée) en aluminium porteuse de moyens électroniques 27, des couches de protection thermique 24, ainsi qu'une plaque 25 qui porte les cellules solaires 13.

Des raidisseurs verticaux et horizontaux 26 de section en I sont posés sur la structure intermédiaire 23 et portent les plaques 25.

Ainsi qu'on l'a illustré sur la figure 13, le panneau est décomposé en une pluralité d'unités de fonctionnement 28.

Les moyens électroniques 27 pour le fonctionnement des unités 28 sont logés entre la structure 23 et les couches de protection thermiques 24. Ils comprennent des moyens d'émission/réception et de déphasage, ainsi que les moyens de gestion associés. Ils comprennent aussi le traitement de l'énergie qui leur est nécessaire et qui leur est fournie par les cellules solaires 13 placées au dos du panneau.

Par ailleurs, chaque panneau est traversé par au moins un manchon 29 destiné à être traversé par un tirant pour sa fixation dans l'enveloppe porteuse lors du lancement.

Puisqu'un élément 29 et un capteur GPS 15 neutralisent tous deux de la fonction d'antenne, on peut avantageusement les regrouper dans une même unité fonctionnelle 28 partiellement neutralisée pour la fonction d'antenne. Cet élément 29 et ce capteur GPS 15 sont alors avantageusement disposés en bord de ladite unité 28 au voisinage du croisement entre deux raidisseurs 26, ainsi qu'on l'a illustré sur la figure 14.

L'alimentation en énergie des équipements hyperfréquence des panneaux se fait directement par les cellules solaires associées à ce panneau, l'autonomie étant acquise soit au niveau de chaque unité, soit au niveau d'un regroupement de plusieurs unités.

Il est possible d'alimenter en signal hyperfréquence chaque panneau ou demi-panneau à l'aide de fibres optiques ou à l'aide de câbles coaxiaux, en étoile à partir du module de servitude 12, ou en chaîne à partir du panneau supérieur (le plus éloigné de la terre) afin que la longueur physique de la chaîne de câbles soit utilisée pour constituer une partie des lignes à retard nécessaires.

Les modules de traitements (BFN, module primaire, module secondaire) sont reliés au module de servitude 12 par un bus de contrôle/commande.

Les moyens électroniques 27 regroupés au niveau d'une même unité fonctionnelle 28 sont réalisés selon une technologie intégrée ou hybride.

Dans le cas d'un panneau rayonnant des deux côtés, une réalisation possible consiste à remplacer la plaque 25 porte cellules solaires par une plaque porte élément rayonnant. Dans les deux cas, pour faciliter l'intégration et le raccordement aux équipements électroniques 27, il est préférable de limiter la surface de ces plaques, une plaque venant fermer après intégration chacune des alvéoles formées par le quadrillage de raidisseurs 26. Ainsi, la démontabilité partielle et le dépannage du panneau restent possible.

### DIMENSIONNEMENT DES GENERATEURS SOLAIRES

Les cellules solaires 13 sont par exemple des cellules de type GaAs/Ge fournissant le courant nécessaire sous 10 Volts dans le pire des cas (c'est-à-dire en fin de vie, avec une incidence solaire pire cas et à 120°C). Il est prévu une chaîne de 16 cellules de ce type par unité fonctionnelle de l'élément 11.

Le choix de la technologie GaAs (plutôt que celle du silicium) permet de supporter des températures de cellules solaires supérieures.

L'énergie ainsi générée est stockée dans des condensateurs électrochimiques et céramiques compris dans les moyens 27 permettant de limiter la baisse de tension pendant l'impulsion radar à ce qui est tolérable par les équipements et la tenue des performances (typiquement 10 %)

### La tension est limitée à 10 Volts.

### CONTRÔLE D'ATTITUDE ET D'ORBITE

Dans sa version la plus simple, il est utilisé une seule tuyère de propulsion placée le long de l'axe roulis. Le contrôle d'attitude est alors essentiellement dimensionné par les perturbations transitoires en lacet, intervenant lors des poussées (suivant V) d'acquisition et de maintien de l'orbite, et dues au désalignement de la tuyère unique. Les corrections de mise à poste sont fractionnées en impulsions élémentaires de durée très limitée afin de rester efficace compte tenu du dépointage engendré en lacet. Ces impulsions élémentaires sont suivies d'une réacquisition du lacet. La durée de la mise à poste peut être longue mais entre deux impulsions élémentaires les conditions d'éclairage solaire et thermique de l'antenne restent assurées. En maintien à poste, les poussées sont plus faibles et surtout peu fréquentes pour ce type de satellite en raison du faible frottement (section très réduite suivant V), on peut admettre cette même approche de fractionnement et d'étalement du temps de réaction du système d'attitude, même si cela nécessite une interruption de la mission sur une ou plusieurs orbites. Au prix d'une complexité accrue, l'utilisation de plusieurs tuyères pilotées en temps d'ouverture permettrait si besoin est de contrer en temps réel le couple parasite lacet et de réduire la durée totale de la manoeuvre de poussée. Les particularités du satellite permettent d'envisager une propulsion à gaz froids, l'accroissement de masse en réservoirs par rapport à une solution à hydrazine pouvant soit rester acceptable y compris pour une durée de mission de 10 ans compte tenu du faible frottement, soit être bienvenue afin d'accroître le gradient de gravité.

Il peut être nécessaire de corriger le plan de l'orbite, au cours de la vie de la mission, notamment pour des orbites utilisant une heure locale différente de 6 H/18 H. Ce type de manoeuvre se différencie des poussées selon V par l'introduction au préalable d'une rotation en lacet de 90° du satellite afin d'amener la tuyère normale au plan.

Avant déploiement de l'antenne, la mesure d'attitude peut être obtenue par filtrage des mesures magnétométriques et permet une précision de l'ordre de 1°, après déploiement on utilise les GPS collectées au niveau de l'antenne et la précision devient inférieure à 1/10ième de °.

Les magnéto-coupleurs fournissent les couples, notamment nécessaires pour l'amortissement des effets pendulaires de gradient en tangage et roulis, ainsi que le contrage des effets permanents (pression solaire) et la récupération des effets transitoires en lacet lors des poussées.

Pour acquérir l'attitude initiale de l'élément formant antennes 11, on procède avantageusement de la façon suivante.

On déploie l'élément 11, puis on applique aux magnéto-coupleurs une loi de commande visant à réduire la vitesse de rotation en n'utilisant que les mesures de magnétomètres.

Le satellite se stabilise sur une position d'équilibre à gradient de gravité.

Deux positions d'équilibre sont néanmoins possibles, l'une l'élément 11 en bas, l'autre l'élément 11 en haut par rapport au module 12.

Dans le cas où l'élément 11 formant antenne(s) est déployé en étant en dessous du module de servitude 12, on effectue une rotation en lacets sur le satellite de façon à orienter les générateurs solaires vers le soleil, pour charger ses batteries et lui permettre une autonomie, puis on applique une nouvelle loi de commande des magnétocoupleurs visant à remettre en rotation le satellite suivant tous ses axes, après quoi on revient à la loi de commande à réduction de vitesse pour parvenir à nouveau à une position d'équilibre à gradient de gravité.

Le processus de remise en rotation puis arrêt de rotation est répété jusqu'à ce que l'antenne acquiert la bonne position.

Après chaque remise en rotation, l'antenne 11 a une chance sur deux de se retrouver dans l'attitude désirée.

Tout ceci conduit à un système d'attitude et de propulsion des plus rudimentaires composé de (sans compter les redondances) : trois magnétocoupleurs, un magnétomètre trois axes, un calculateur de bord, un récepteur pour le traitement GPS et quatre antennes de réception GPS (on utilise ici celle des antennes sur les panneaux qui sont les plus éloignées les unes des autres), un sous-système de propulsion basé sur une seule tuyère.

On peut noter que le présent contrôle d'attitude ne mettant en jeu aucun capteur optique d'aucune sorte (terrestre, solaire ou stellaire), permet le fonctionnement indépendamment de l'heure locale ou de ses variations au cours de la mission.

### SATELLITE A ATTITUDE INVERSEE (ELEMENT 11 SITUE AU DESSOUS DU MODULE DE SERVITUDE) OU A ATTITUDE INDIFFERENTE

L'attitude nominale du satellite peut être inversée par rapport à celle décrite jusqu'ici, c'est-à-dire consister en un élément formant antenne situé au dessous du module de servitude 12.

L'avantage résultant est la suppression des contraintes de champ de vue radar à basse incidence. Les panneaux 14a de dégagement de champ de vue peuvent néanmoins rester nécessaires pour éviter au niveau des panneaux 14 supérieurs un masquage trop important des satellites GPS, cela ne dépend plus que du nombre minimal de satellites GPS nécessaires pour opérer. Le masquage des directions d'incidence GPS susceptibles d'occasionner des trajets multiples par réflexion parle plateau 20 du module de servitude est désormais naturellement fait par la terre. L'alimentation en chaîne des signaux hyperfréquences vers les panneaux se fait en commençant par le premier panneau à proximité du module 12 et non le panneau opposé comme cela est le cas dans l'attitude précédemment décrite.

Il faut par contre aménager différemment l'antenne de télémesure de façon à éviter les obstructions de son champ de vue par l'élément 11. La solution peut consister en deux antennes situées au niveau du module de servitude de part et d'autre du plan de l'élément 11 de sorte qu'il y ait toujours une antenne en visibilité directe quelle que soit la situation de la station par rapport au plan de l'orbite. Au maximum, une seule commutation d'antenne est nécessaire par passage, par ailleurs un déport des antennes de télémesure hors du plan permet lors du passage de la station dans le plan d'orbite de recouvrir les domaines de visibilité depuis les deux antennes et de gérer plus souplement l'instant de commutation.

Egalement, le satellite peut être conçu pour pouvoir fonctionner dans la première des positions d'équilibre obtenue après déploiement et pour ainsi éviter les procédures de remises en rotation décrites précédemment. En effet, il suffit pour cela sur le plan matériel, de prévoir les deux types de liaison de télémesure correspondant aux deux géométries, un dimensionnement des panneaux 14a de dégagement de visibilité suivant le pire cas, les deux possibilités commutables pour démarrer la chaîne d'alimentation en hyperfréquence des panneaux ainsi qu'un contrôle thermique du module compatible de l'une et l'autre des géométries. Le reste des adaptations à la géométrie effective ne mettant en jeu que des réactions mineures principalement de nature logiciele.

Tout ce qui précède s'applique également au cas où l'élément 11 est en deux parties situées au dessus et en dessous du module 12.

### APPLICATION A DES MISSIONS BASSE FREQUENCE, OU HAUTE FREQUENCE OU MULTIFREQUENCE

Toutes caractéristiques autres étant maintenues identiques pour la mission, la hauteur fonctionnelle de l'élément formant antenne(s) 11 est directement proportionnelle à la longueur d'onde, si bien que les conditions de gradient de gravité peuvent ne pas être acquises naturellement pour des missions à hautes fréquences (X ou C) alors que c'est plus souvent le cas pour des missions basses fréquences (S, L ou P). L'introduction de panneaux 14a pleins ou creux en addition au panneau GS du module de servitude, est surtout nécessaire aux hautes fréquences.

Appliqué à la combinaison de fréquences qui constitue une des exigences des nouvelles générations de radar, le système conserve toute son optimalité puisque l'ensemble des panneaux des différentes fréquences concourent au gradient de gravité d'ensemble et il est moins ou il n'est plus nécessaire d'ajouter des panneaux 14a. Notamment, à une mission en bande L constituée de 8 panneaux 14 fonctionnels, il suffit d'ajouter un panneau de taille identique en bande X pour constituer une mission bi-fréquence, et ce moyennant un redimensionnement marginal du module de servitude par rapport au cas monofréquence. Les différentes fréquences peuvent utiliser des longueurs fonctionnelles d'antenne L différentes, le maintien d'une longueur standard de panneaux par extension en surface non fonctionnelle des panneaux les plus courts permet éventuellement de faciliter le maintien des conditions de centrage (masses, centre de poussées de pression solaire, etc).

Dans l'option d'autonomie énergétique de chacun des antennes de l'élément 11, le "tapissage" des cellules solaires réalisé au dos des panneaux doit être plus dense à haute fréquence, car en général les besoins énergétiques sont plus forts (c'est le cas pour le radar) et la hauteur d'antenne est plus faible. En cas d'insuffisance énergétique et de recours à de la surface supplémentaire de cellules ailleurs sur l'élément 11 qu'au dos de ladite antenne, il est préférable de placer ces surfaces au voisinage direct et de part et d'autre de ladite antenne afin de limiter les liaisons de transfert d'énergie et éventuellement conserver le concept de maillage électronique intégral précédemment décrit.

### APPLICATION A DES MISSIONS D'INTERFEROMETRIE RADAR A UN SEUL PASSAGE

L'interférométrie radar à un seul passage vise principalement à obtenir une information topographique et consiste à faire simultanément deux images à partir de deux antennes espacées, une seule antenne émet, les deux reçoivent. La précision de l'information dépend de la longueur, relativement à la longueur d'onde, de la base formée par les deux antennes normale au vecteur vitesse, si bien que pour des antennes appartenant au même satellite, l'interférométrie n'est généralement envisagée qu'à haute fréquence (X ou C) moyennant des bases d'antenne supérieurs à 10 ou 15 m.

L'introduction d'une mission interférométrique sur un satellite radar relevant de la présente invention peut être obtenue aisément. La deuxième antenne uniquement réceptrice peut généralement faire l'objet d'un seul panneau 14, car d'une part il peut ne pas être nécessaire de rechercher le fonctionnement aux hautes incidences qui dimensionnent la hauteur antenne, d'autre part les exigences en générateur solaire au dos de l'antenne sont largement réduites car l'antenne n'est que réceptrice, et donc peu ou pas consommatrice. Si la mission n'est que haute fréquence, ce panneau 14 est rajouté entre le panneau 14a faisant office de dégagement de champ de vue (ainsi qu'éventuellement de générateur solaire pour le module) et les autres panneaux 14a introduits spécifiquement pour le gradient de gravité. Si ces derniers sont absents ou insuffisants en nombre, d'autres sont introduits afin d'atteindre la hauteur de base désirée. En cas de mission multifréquence, la mission interférométrique ne concerne généralement qu'une seule fréquence haute, le panneau 14 de réception interférométrique 14 d'une part et l'antenne principale à ladite haute fréquence d'autre part sont placés aux deux extrémités de l'élément 11, tout en restant néanmoins séparés tous deux du module de servitude par le panneau 14a de dégagement du champ de vue. La base interférométrique ainsi formée peut être éventuellement accrue par des panneaux non fonctionnels supplémentaires 14a.

Egalement, pour réduire encore l'impact d'introduction de la fonction interférométrique, on peut combiner dans un même panneau 14a les fonctions de générateur solaire pour le module et celle d'antenne réceptrice interférométrique. D'une part, la très faible consommation de cette dernière préserve la fonction de générateur pour le module, d'autre part l'antenne réceptrice n'a pas besoin d'être dégagée en champ de vue car n'a pas besoin de viser les plus basses incidences ou peut n'occuper que la partie haute et donc mieux dégagée du panneau si la hauteur désirée est inférieure à un panneau, ce qui peut être le cas en particulier si l'on ne vise pas non plus les très hautes fréquences.

L'adjonction de la fonction interférométrique se fait ainsi à coût marginal, alors que pour un satellite classique il est nécessaire d'introduire spécifiquement un mât déployable portant à son extrémité l'antenne réceptrice.

### EXPLOITATION PARTAGÉE ET ÉQUILIBRÉE DANS UN CONTEXTE DE COOPÉRATION INTERNATIONAL

La coopération internationale dans le domaine spatial doit, pour réussir, veiller à un partage équilibré des rôles des différents pays, non seulement dans le développement mais aussi l'exploitation. Malheureusement, pour un système d'observation, la tâche d'exploitation clef, à savoir la programmation de l'instrument doit être centralisée afin d'assurer une gestion optimale et sans conflit des demandes ainsi qu'une sauvegarde de l'intégrité du satellite. Ceci pose un problème insoluble en absence d'un partenaire majoritaire auquel reviendrait naturellement le rôle d'accueillir sur son territoire le centre de programmation mission ainsi que le centre de contrôle satellite que l'on ne peut généralement pas dissocier du précédent.

Le schéma consistant à ce que chaque partenaire reste maître de l'usage du satellite pour des prises de vue dans la région délimitée par le cercle de visibilité de sa station, de manière analogue à ce qui se pratique sur les satellites de télécommunication type INTELSAT (location d'un répéteur ou d'un faisceau), n'est pas jusqu'à présent envisageable. En effet, l'usage de ressources dans une portion de l'orbite affecte toujours leur disponibilité ailleurs si bien que la coordination centralisée reste indispensable. En optique, les délais de changement de visée peuvent être très longs (basculement du satellite ou de miroirs) tandis que pour un radar moderne à débattement agile, le problème réside dans le respect des durées de recharge des batteries, des limitations de marche/arrêt des émetteurs, ou encore des limites de conditions thermiques des équipements.

Le principe de satellite tel qu'illustré sur les figures 4 et suivantes permet en retenant l'option d'autonomie énergétique de l'élément 11, un fonctionnement permanent du radar hors éclipse. En considérant, dans ce schéma de partage géographique, que les données collectées ne sont pas stockées à bord mais retransmises en temps réel vers la station sol (pas de recours à une fonction de stockage et revidage), on peut ramener le problème du partage du satellite à une simple distribution de cercle de visibilités entre partenaires et garantir à chacun l'autonomie et la discrétion de programmation et de recueil des données.

Néanmoins, cette capacité nouvelle à cloisonner l'accès au satellite de manière géographique n'est pas une condition suffisante pour laisser chaque partenaire maître du satellite dans son secteur. Il faut aussi prendre en compte les exigences communes de gestion et sauvegarde de l'état du satellite. On peut noter à ce propos que l'architecture de maillage électronique total de l'élément 11 offre un durcissement contre toute dégradation découlant de quelconque programmation. En effet, chaque unité fonctionnelle de base composée, d'un groupe de module radiofréquence et d'un pavé correspondant de cellules solaires, doit dissiper en elle-même quasiment la totalité de l'énergie fournie par les cellules indépendamment de sa contribution fonctionnelle à l'ensemble de sorte que ladite unité ne connaît qu'un seul régime thermique gouverné par l'état courant des cellules solaires et de l'électronique et indépendant de l'état d'activation et de programmation de l'unité. L'élément 11 ne dispose d'aucune redondance, mais subit simplement une dégradation progressive de ses performances liée aux pannes ou dégradations des unités fonctionnelles élémentaires. Chacun peut à sa guise convenir de la façon optimale de gérer cette dégradation (par le choix des unités à désactiver et des lois de diagramme d'antenne à former) sans que cela n'affecte le processus même de dégradation (pas de processus de propagation de pannes).

Au-delà de la programmation temps réel de la prise de vue, de l'exploitation technologique de l'élément 11 et du type de produit image (fauchée, forme d'ondes, résolution, incidence), chacun peut développer et mettre en oeuvre une compétence radar en fonction de ses affinités et besoins locaux. La partie de la charge utile intégrée dans le module de servitude bénéficie elle aussi d'une ressource énergétique permanente, mais n'est pas constituée comme l'élément formant antenne 11 par une accumulation d'un grand nombre d'unités fonctionnelles identiques. La faible criticité opérationnelle des technologies employées (pas de tubes, pas de mécanismes, pas de délai de mise en configuration..), ainsi que la dimension réduite des fonctions permettent d'envisager un système de redondance par blocs autour d'un nombre réduit de commutateurs activables indifféremment par chacun des partenaires. De cette manière, le concept de partage peut ainsi être étendu à l'ensemble de la charge utile.

Le fonctionnement du satellite met bien sûr également en jeu des fonctions d'orbitation (maintien de l'orbite et de l'attitude grossière de la voile) qui nécessitent un contrôle depuis le sol. Non affectées par l'usage de la charge utile, ces fonctions peuvent par contre conduire à des restrictions d'accès nominalement prédictibles et peu fréquentes affectant tous les partenaires (exemple : manoeuvres et durées de stabilisation). Elles devront être centralisées et confiées à un seul acteur devant informer les partenaires exploitants mais agissant sans interaction avec ces derniers.

Le schéma de partage qui précède est décrit suivant le mode le plus statique qui soit afin d'illustrer une suppression totale des interconnexions et interdépendances (partage d'arcs orbitaux ou de couvertures) et trouver une valorisation dans une aisance accrue d'amorçage de programmes impliquant un grand nombre de petits partenaires. D'autres ententes peuvent être envisagées sur cette base : des ententes plus intimes entre partenaires, ponctuelles ou généralisées, pour une allocation dynamique des arcs, ou encore introduction d'un partenaire central spécifiquement en charge des prises de vue enregistrées et de la gestion de la mémoire bord sur des arcs non affectés ou pour le compte de partenaires locaux.

Il est important de noter que ce concept de partage est d'abord lié à l'omniprésence de la ressource énergétique. Celle-ci peut être obtenue également, avec un satellite classique par surdimensionnement du générateur solaire et donc recours à des modules de servitude lourds conduisant eux-mêmes à des lanceurs lourds. L'intérêt particulier d'un satellite tel qu'illustré sur les figures 4 et suivantes est le caractère inhérent et gratuit de cette capacité.

## Revendications

1. Satellite d'observation ou de télécommunication à orbite basse comportant un élément formant antenne(s) de forme générale plane (11), **caractérisé en ce que** l'élément formant antenne(s) (11) s'étend sensiblement dans un plan passant par le centre de la terre lorsque le satellite se trouve dans son orbite opérationnelle et l'élément formant antenne(s) est en configuration opérationnelle.

2. Satellite selon la revendication 1, **caractérisé en ce que** l'élément formant antenne(s) (11) s'étend sensiblement dans le plan de son orbite.

3. Satellite selon l'une des revendications précédentes, **caractérisé en ce que** la hauteur de l'élément formant antenne(s) définie par la dimension le long de l'axe de gravité est supérieure à sa dimension perpendiculaire, de sorte que ledit satellite est naturellement stabilisé par gradient de gravité sur les axes roulis et tangage.

4. Satellite selon la revendication 3, **caractérisé en ce que** l'élément formant antenne(s) comporte dans sa hauteur une partie non fonctionnelle en terme d'antenne, éventuellement partiellement creuse, qui concourt à stabiliser naturellement ledit satellite par gradient de gravité sur les axes de roulis et tangage.

5. Satellite selon l'une des revendications précédentes, **caractérisé en ce qu'**il comporte un générateur solaire et **en ce que** les cellules (13) dudit générateur solaire sont portées par l'élément formant antenne(s) (11).

6. Satellite selon l'une des revendications précédentes, **caractérisé en ce que** l'élément formant antenne(s) dispose de fonctions d'antenne sur ses deux faces.

7. Satellite selon les revendications 5 et 6, **caractérisé en ce qu'**une partie de l'élément (11) formant antenne(s) ne porte pas de cellules solaires (13) et fait fonction d'antenne sur les deux faces.

8. Satellite selon l'une des revendications précédentes, **caractérisé en ce que** l'élément formant antenne(s) (11) présente une géométrie déformable et comporte des moyens de contrôle de la phase et de l'amplitude de l'onde émise ou reçue répartis sur sa surface et **en ce qu'**il comporte une pluralité de capteurs de positionnement et/ou de déformation et/ou de désalignement répartis sur ledit élément formant antenne(s) et permettant la mesure des déformations et/ou désalignements puis leur compensation au niveau des moyens de contrôle.

9. Satellite selon la revendication 8, **caractérisé en ce que** les capteurs sont des capteurs de radio-positionnement terrestres ou satellitaires qui permettent également la mesure, puis la compensation au niveau des moyens de contrôle des erreurs d'attitude absolue.

10. Satellite selon la revendication 9, **caractérisé en ce que** les capteurs sont des capteurs GPS.

11. Satellite selon l'une des revendications 9 ou 10, **caractérisé en ce qu'**il comporte des moyens de traitement différentiel des mesures de phases sur les signaux de radio-positionnement fournies par chaque capteur pour la mesure des positionnements relatifs des capteurs ainsi que de l'attitude absolue du plan moyen défini par ces capteurs.

12. Satellite selon l'une des revendications précédentes, **caractérisé en ce qu'**il comporte un module de servitude qui intercepte le plan de l'orbite et **en ce que** l'élément formant antenne(s) est situé d'un seul côté dudit module de servitude.

13. Satellite selon l'une des revendications 1 à 11, **caractérisé en ce qu'**il comporte un module de servitude qui intercepte le plan de l'orbite et **en ce que** l'élément formant antenne(s) s'étend de part et d'autre du module de servitude

14. Satellite selon la revendication 13, **caractérisé en ce que** les deux parties de l'élément formant antenne (11) sont dans deux plans distincts dont l'intersection passe par le centre de la terre.

15. Satellite selon la revendication 3 prise seule ou en combinaison avec l'une des revendications. 4 à 14, **caractérisé en ce qu'**il comporte un module de servitude dont le centre de gravité est placé sur l'axe de petite inertie de l'élément (11) formant antenne(s), de sorte que l'équilibre naturel par gradient de gravité le long de l'axe de gravité de l'élément formant antenne(s) est conforté et que les couples de pression solaires sur le satellite sont limités.

16. Satellite selon l'une des revendications 11 à 15 en combinaison avec la revendication 9, **caractérisé en ce qu'**il permet, par adjonction sur l'élément (11) d'une partie non fonctionnelle en terme d'antenne située à proximité du module, d'assurer d'un part pour la ou les antennes de l'élément (11) une occultation minimale par le module de servitude, et d'autre part pour les capteurs de radiopositionnement, un écart angulaire par rapport à la normale à l'élément (11) de la direction de réception des signaux de radiopositionnement en deça duquel il n'y a pas de trajet multiple par réflexion sur le module et au delà duquel les signaux ne sont pas considérés.

17. Satellite selon la revendication 5, prise seule ou en combinaison avec l'une des revendications 6 à 16, **caractérisé en ce que** les cellules solaires (13) permettent de couvrir les besoins énergétiques d'au moins une antenne de l'élément formant antenne(s) (11).

18. Satellite selon la revendication 17, **caractérisé en ce qu'**une partie de l'élément formant antenne(s) (11) est non fonctionnelle en terme d'antenne et porte des cellules solaires (13).

19. Satellite selon les revendications 17 et 18 prises en combinaison, **caractérisé en ce que** les cellules solaires, qui permettent de couvrir les besoins énergétiques de l'antenne précitée, sont disposées au dos de ladite antenne, ainsi qu'éventuellement sur des espaces non fonctionnels en terme d'antenne disposés de part et d'autre de ladite antenne

20. Satellite selon l'une des revendications 17 à 19, **caractérisé en ce que** les cellules solaires (13) de l'élément formant antenne(s) (11) permettent de couvrir les besoins énergétiques de celui-ci.

21. Satellite selon la revendication 18 prise seule ou en combinaison avec l'une des revendications 19 et 20, **caractérisé en ce que** la (ou les) parties non fonctionnelles en terme d'antenne qui porte(nt) des cellules solaires assurent au moins l'alimentation du module de servitude (12) hors des éclipses.

22. Satellite selon la revendication 19, **caractérisé en ce qu'**une antenne présente un maillage d'unités électroniques élémentaires de surface, chaque unité élémentaire étant couplée et pourvue directement par un pavé d'une ou plusieurs cellules solaires (13).

23. Satellite selon la revendication 22, **caractérisé en ce que** le pavé de cellule(s) solaire(s) (13) est placé directement au regard de l'unité élémentaire.

24. Satellite selon la revendication 5 prise seule ou en combinaison avec l'une des revendications 6 à 23, **caractérisé en ce que** les cellules solaires (13) sont des cellules de technologie AsGa ou silicium.

25. Satellite selon la revendication 3 prise seule ou en combinaison avec l'une des revendications 4 à 24, **caractérisé en ce que** l'élément formant antenne(s) (11) comporte plusieurs antennes distinctes de fréquences identiques ou différentes, juxtaposées le long de l'axe de gravité.

26. Satellite selon la revendication 24, **caractérisé en ce que** l'élément formant antenne(s) (11) comporte deux antennes à la même fréquence permettant une observation radar interférométrique, lesdites antennes étant séparées le long de l'axe de la verticale locale.

27. Satellite selon l'une des revendications précédentes comportant au moins un élément plan constitué d'une pluralité de panneaux articulés les uns aux autres, tel qu'un élément formant antenne(s), ainsi que des équipements associes ou de servitudes, **caractérisée en ce qu'**il comporte une enveloppe porteuse qui intègre en son intérieur au lancement les équipements et les panneaux et qui présente au moins une trappe pyrotechnique pour le déploiement des panneaux.

28. Satellite selon la revendication 27, **caractérisé en ce que** l'enveloppe porteuse comporte deux demi-coques, l'une qui intègre les différents équipements associés et de servitude, l'autre qui porte une couture pyrotechnique délimitant une trappe à deux volets et dont l'explosion matérialise et éjecte les deux volets qui restent ensuite retenus en position ouverte par deux charnières situées le long de l'interface avec la première demi-coque, de sorte que les panneaux puissent être stockés au lancement dans le logement défini entre les coques et déployés ensuite d'un seul côté du satellite à travers la trappe.

29. Satellite selon la revendication 27, **caractérisé en ce que** l'enveloppe porteuse est constituée de deux coques assemblées sur une partie médiane, la partie médiane intégrant les différents équipements associés et de servitude, tandis que chacune des coques latérales porte une couture pyrotechnique délimitant une trappe à deux volets et dont l'explosion matérialise et éjecte les deux volets qui restent ensuite retenus en position ouverte par deux charnières portées sur cette même demi-coque et situées le long de l'interface avec la partie médiane, de sorte que les panneaux puissent être stockés au lancement dans les deux logements définis entre chacune des coques latérales et la partie médiane et déployés ensuite de chaque côté du satellite au travers de la trappe correspondante.

30. Satellite selon l'une des revendications 27 à 29, **caractérisé en ce que** pendant la phase de lancement, les panneaux (14) sont repliés en étant plaqués sur un plateau sur lequel ils sont accrochés par des tirants (29).

31. Satellite selon la revendication 30, **caractérisé en ce que** chaque panneau est traversé par au moins un manchon destiné à être traversé par un tirant (29) pour sa fixation sur le plateau.

32. Satellite selon l'une des revendications 27 à 31, **caractérisé en ce que** l'axe de plus petite inertie de l'enveloppe porteuse et des différents panneaux est orienté au lancement le long de l'axe lanceur et **en ce que** l'axe de déploiement est normal à l'axe du lanceur.

33. Satellite selon la revendication 32, **caractérisé en ce que** la forme extérieure en configuration de lancement de l'enveloppe porteuse est ajustée aérodynamiquement de façon à remplacer la coiffe de lancement.

34. Satellite selon l'une des revendications 27 à 33, **caractérisé en ce que** l'enveloppe porteuse et les éléments associés et de servitude constituent le module de servitude.

35. Satellite selon les revendications 3 et 34 prises en combinaison, **caractérisé en ce que** le déploiement est réalisé selon la verticale.

36. Satellite selon l'une des revendications 27 à 35, **caractérisé en ce qu'**un panneau présente une structure empilée qui comporte éventuellement un radôme (21), un panneau rayonnant (22), une structure intermédiaire en NIDA (23) porteuse d'équipements électroniques, éventuellement une couche de protection thermique (24), une plaque qui porte les cellules solaires (13); et/ou des éléments rayonnants, le panneau comportant en outre des raidisseurs (26) posés sur la structure intermédiaire (23) et porteurs de la (ou des) plaque(s) qui porte(nt) les cellules solaires (13) et/ou des éléments rayonnants.

37. Satellite selon la revendication 36 prise en combinaison avec la revendication 31, **caractérisé en ce qu'**un manchon (29) est disposé au voisinage du croisement entre deux raidisseurs (26).

38. Satellite selon l'une des revendications précédentes, **caractérisé en ce que** l'ensemble des portions de l'élément (11) qui diffère de part leur fonction d'antenne ou de part la présence ou non de fonction d'antenne sont distribuées le long de l'axe de déploiement des panneaux de sorte que chacun des panneaux réalise une grande homogénéité fonctionnelle.

39. Satellite selon l'une des revendications précédentes, **caractérisé en ce qu'**il comporte selon la hauteur de l'antenne un réseau de points pour le contrôle en élévation du diagramme de l'antenne, **en ce que** le diagramme élémentaire en élévation de la portion d'antenne associée à chaque point de contrôle est orienté de manière fixe pour couvrir le domaine d'incidence utile, et **en ce que** l'espacement entre ces points le long de la hauteur et le diagramme élémentaire de la portion d'antenne qui module les gains du lobe principal et des lobes parasites liés au réseau, sont tels que les lobes parasites, lors du dépointage du lobe principal de part et d'autre de l'axe d'orientation du diagramme élémentaire, sont soit masqués physiquement par le plan de l'antenne et éventuellement le module de servitude, soit rejetés au-delà de la terre, soit rencontrent la terre à gain très faible, et tels qu'un gain minimal est préservé pour le lobe principal.

40. Satellite selon la revendication 39, **caractérisé en ce que** la portion élémentaire d'antenne associée à chaque point de contrôle est constituée par regroupement en parallèle depuis un même point de contrôle et selon la hauteur de plusieurs éléments rayonnants et **en ce qu'**un profil de déphasage selon une rampe fixe et constante est introduit entre les éléments rayonnants d'un même point de contrôle.

41. Satellite selon l'une des revendications précédentes, **caractérisé en ce que** les portions élémentaires d'antenne associées à chaque point de contrôle sont regroupées selon la hauteur en sections, chacune étant associée à un point de contrôle de retard temporel permettant, quelle que soit la direction visée en élévation, de maintenir à l'aller (et au retour) un trajet temporel de la source centrale de signaux émis (du point central de recombinaison des signaux reçus) au point visé au sol indépendant de la section transitée, et **en ce que** à l'intérieur d'une même section une distribution différentielle fixe de retard est établie vers (et depuis) les portions élémentaires d'antenne assurant pour une direction particulière moyenne de visée un trajet temporel vers (et depuis le point visé au sol) indépendant de la portion élémentaire transitée dans la section, de façon à ce que la désynchronisation temporelle résiduelle le long de la hauteur de l'antenne ne dépende que du dépointage incrémental autour du dépointage moyen et que de grandes hauteurs de section puissent être obtenues.

42. Satellite selon l'une des revendications précédentes, **caractérisé en ce que** la distribution des signaux vers (et depuis) chacune des sections à retard commandé se fait en chaîne en partant depuis le côté de l'élément formant antenne (11) opposé à l'astre autour duquel le satellite est en orbite, la chaîne de câble constituant une partie des lignes à retard nécessaires.

## Claims

1. Low orbit observation or telecommunication satellite comprising an antenna(s) forming element of general plane shape (11), **characterized in that** the antenna(s) forming element (11) extends substantially in a plane passing through the centre of the earth when the satellite is in its operational orbit and the antenna(s) forming element is in operational configuration.

2. Satellite according to Claim 1, **characterized in that** the antenna(s) forming element (11) extends substantially in the plane of its orbit.

3. Satellite according to one of the preceding claims, **characterized in that** the height of the antenna(s) forming element as defined by the dimension along the gravity axis is greater than its perpendicular dimension, so that the said satellite is naturally stabilized by gravity gradient on the roll and pitch axes.

4. Satellite according to Claim 3, **characterized in that** the antenna(s) forming element comprises in its height a part which is nonfunctional antenna-wise, possibly partially hollow, which helps to naturally stabilize the said satellite by gravity gradient on the roll and pitch axes.

5. Satellite according to one of the preceding claims, **characterized in that** it comprises a solar generator and **in that** the cells (13) of the said solar generator are carried by the antenna(s) (11) forming element (11) .

6. Satellite according to one of the preceding claims, **characterized in that** the antenna(s) forming element has antenna functions on both its faces.

7. Satellite according to Claims 5 and 6, **characterized in that** a part of the antenna(s) forming element (11) does not carry solar cells (13) and functions as antenna on both faces.

8. Satellite according to one of the preceding claims, **characterized in that** the antenna(s) forming element (11) exhibits a deformable geometry and comprises means of control of the phase and amplitude of the wave emitted or received, which means are distributed over its surface, and **in that** it comprises a plurality of positioning and/or deformation and/or misalignment sensors distributed over the said antenna(s) forming element and allowing the measurement of the deformations and/or misalignments and then their compensation at the level of the means of control.

9. Satellite according to Claim 8, **characterized in that** the sensors are terrestrial or satellite radio-positioning sensors which also allow the measurement and then the compensation at the level of the means of control of the errors of absolute attitude.

10. Satellite according to Claim 9, **characterized in that** the sensors are GPS sensors.

11. Satellite according to one of Claims 9 and 10, **characterized in that** it comprises means of differential processing of the measurements of phases on the radio-positioning signals provided by each sensor for the measurement of the relative positionings of the sensors as well as of the absolute attitude of the mean plane defined by these sensors.

12. Satellite according to one of the preceding claims, **characterized in that** it comprises an ancillary module which intercepts the plane of the orbit and **in that** the antenna(s) forming element is situated on just one side of the said ancillary module.

13. Satellite according to one of Claims 1 to 11, **characterized in that** it comprises an ancillary module which intercepts the plane of the orbit and **in that** the antenna(s) forming element extends on either side of the ancillary module.

14. Satellite according to Claim 13, **characterized in that** the two parts of the antenna forming element (11) are in two distinct planes whose intersection passes through the centre of the earth.

15. Satellite according to Claim 3, taken alone or in combination with one of Claims 4 to 14, **characterized in that** it comprises an ancillary module whose centre of gravity is placed on the axis of small inertia of the antenna(s) forming element (11), so that the natural equilibrium by gravity gradient along the gravity axis of the antenna(s) forming element is strengthened and that the solar pressure moments on the satellite are limited.

16. Satellite according to one of Claims 11 to 15 in combination with Claim 9, **characterized in that** it makes it possible, by appending to the element (11) an antenna-wise nonfunctional part situated in proximity to the module, to ensure on the one hand in respect of the antenna or antennas of the element (11) minimum occultation by the ancillary module, and on the other hand, in respect of the radiopositioning sensors, an angular deviation with respect to the normal to the element (11) of the direction of reception of the radio-positioning signals which is such that short of it there is no multipath by reflection on the module and beyond it the signals are not considered.

17. Satellite according to Claim 5, taken alone or in combination with one of Claims 6 to 16, **characterized in that** the solar cells (13) make it possible to cover the energy requirements of at least one antenna of the antenna(s) forming element (11).

18. Satellite according to Claim 17, **characterized in that** a part of the antenna(s) forming element (11) is nonfunctional antenna-wise and carries solar cells (13).

19. Satellite according to Claims 17 and 18 taken in combination, **characterized in that** the solar cells, which make it possible to cover the energy requirements of the aforesaid antenna, are disposed on the back of the said antenna, as well as possibly over antenna-wise nonfunctional spaces disposed on either side of the said antenna.

20. Satellite according to one of Claims 17 to 19, **characterized in that** the solar cells (13) of the antenna(s) forming element (11) make it possible to cover the energy requirements of the latter.

21. Satellite according to Claim 18, taken alone or in combination with one of Claims 19 and 20, **characterized in that** the antenna-wise nonfunctional part (or parts) which carries (carry) solar cells ensure at least the supply to the ancillary module (12) outside of eclipses.

22. Satellite according to Claim 19, **characterized in that** an antenna exhibits a mesh of surface elementary electronic units, each elementary unit being coupled and provided for directly by a patch of one or more solar cells (13).

23. Satellite according to Claim 22, **characterized in that** the patch of solar cell(s) (13) is placed directly opposite the elementary unit.

24. Satellite according to Claim 5, taken alone or in combination with one of Claims 6 to 23, **characterized in that** the solar cells (13) are AsGa or silicon technology cells.

25. Satellite according to Claim 3, taken alone or in combination with one of Claims 4 to 24, **characterized in that** the antenna(s) forming element (11) comprises several distinct antennas of identical or different frequencies, juxtaposed along the gravity axis.

26. Satellite according to Claim 24, **characterized in that** the antenna(s) forming element (11) comprises two antennas of the same frequency allowing interferometric radar observation, the said antennas being separated along the axis of the local vertical.

27. Satellite according to one of the preceding claims comprising at least one plane element consisting of a plurality of panels hinged to one another, such as an antenna(s) forming element, as well as associated or ancillary items of equipment, **characterized in that** it comprises a carrier envelope which on launch incorporates within it the items of equipment and the panels and which exhibits at least one pyrotechnic trap for the deployment of the panels.

28. Satellite according to Claim 27, **characterized in that** the carrier envelope comprises two half-shells, one which incorporates the various associated and ancillary items of equipment, the other which carries a pyrotechnic seam delimiting a trap with two flaps and the exploding of which demarcates and ejects the two flaps which thereafter remain held in the open position by two articulations situated along the interface with the first half-shell, so that the panels can be stowed at launch in the housing defined between the shells and thereafter deployed on just one side of the satellite through the trap.

29. Satellite according to Claim 27, **characterized in that** the carrier envelope consists of two shells assembled on a median part, the median part incorporating the various associated and ancillary items of equipment, while each of the lateral shells carries a pyrotechnic seam delimiting a trap with two flaps and the exploding of which demarcates and ejects the two flaps which thereafter remain held in the open position by two articulations carried on this same half-shell and situated along the interface with the median part, so that the panels may be stowed on launch in the two housings defined between each of the lateral shells and the median part and thereafter deployed on each side of the satellite through the corresponding trap.

30. Satellite according to one of Claims 27 to 29, **characterized in that**, during the launch phase, the panels (14) are folded back flat against a platen to which they are attached by tie-rods (29).

31. Satellite according to Claim 30, **characterized in that** each panel is traversed by at least one sleeve intended to be traversed by a tie-rod (29) for its fixing to the platen.

32. Satellite according to one of Claims 27 to 31, **characterized in that** the axis of smallest inertia of the carrier envelope and of the various panels is oriented at launch along the launcher axis and **in that** the axis of deployment is normal to the axis of the launcher.

33. Satellite according to Claim 32, **characterized in that** the exterior shape in the launch configuration of the carrier envelope is adjusted aerodynamically in such a way as to replace the launch fairing.

34. Satellite according to one of Claims 27 to 33, **characterized in that** the carrier envelope and the associated and ancillary elements constitute the ancillary module.

35. Satellite according to Claims 3 and 34 taken in combination, **characterized in that** the deployment is carried out along the vertical.

36. Satellite according one of Claims 27 to 35, **characterized in that** a panel exhibits a stacked structure which possibly comprises a radome (21), a radiating panel (22), an intermediate NIDA structure (23) carrying electronic equipment, possibly a thermal protection layer (24), a plate which carries the solar cells (13); and/or radiating elements, the panel furthermore comprising stiffeners (26) laid on the intermediate structure (23) and carrying the plate (or plates) which carries (carry) the solar cells (13) and/or radiating elements.

37. Satellite according to Claims 36, taken in combination with Claim 31, **characterized in that** a sleeve (29) is disposed in the vicinity of the crossover between two stiffeners (26).

38. Satellite according to one of the preceding claims, **characterized in that** all the portions of the element (11) which differ on account of their antenna function or on account of the presence or otherwise of antenna function are dispersed along the axis of deployment of the panels so that each of the panels achieves great functional homogeneity.

39. Satellite according to one of the preceding claims, **characterized in that** it comprises along the height of the antenna an array of points for the elevational control of the antenna pattern, **in that** the elementary elevational pattern of the antenna portion associated with each control point is oriented fixedly so as to cover the domain of useful incidence, and **in that** the spacing between these points along the height and the elementary pattern of the antenna portion which modulates the gains of the main lobe and of the parasitic lobes related to the array are such that the parasitic lobes, when the pointing of the main lobe is offset on either side of the axis of orientation of the elementary pattern, are either masked physically by the plane of the antenna and possibly the ancillary module, or rejected beyond the earth, or encounter the earth with very low gain, and are such that a minimum gain is preserved for the main lobe.

40. Satellite according to Claim 39, **characterized in that** the elementary antenna portion associated with each control point is constituted by parallel grouping from one and the same control point and along the height of several radiating elements and **in that** a phase shift profile according to a fixed and constant ramp is introduced between the radiating elements of one and the same control point.

41. Satellite according to one of the preceding claims, **characterized in that** the elementary antenna portions associated with each control point are grouped along the height in sections, each being associated with a time delay control point making it possible, whatever the elevational direction of aim, to maintain on the outward leg (and on the return leg) a temporal path from the central source of emitted signals (from the central point of recombination of the signals received) to the aimpoint on the ground which is independent of the section traversed, and **in that** within one and the same section a fixed differential distribution of delay is established to (and from) the elementary antenna portions ensuring for a particular mean direction of aim a temporal path to (and from) the aimpoint on the ground which is independent of the elementary portion traversed in the section, in such a way that the residual temporal desynchronization along the height of the antenna depends only on the incremental pointing offset around the mean pointing offset and that large section heights can be obtained.

42. Satellite according to one of the preceding claims, **characterized in that** the distribution of the signals to (and from) each of the sections with controlled delay is chained starting from the side of the antenna forming element (11) away from the heavenly body around which the satellite is in orbit, the cable chain constituting a part of the necessary delay lines.

## Patentansprüche

1. Beobachtungs- oder Fernmeldesatellit für einen niedrigen Orbit mit einem Antennenelement mit allgemein ebener Form (11), **dadurch gekennzeichnet, dass** sich das Antennenelement (11) im Wesentlichen in einer Ebene erstreckt, die durch den Erdmittelpunkt verläuft, wenn sich der Satellit in seinem Bestimmungsorbit befindet und sich das Antennenelement im Betriebszustand befindet.

2. Satellit nach Anspruch 1, **dadurch gekennzeichnet, dass** sich das Antennenelement (11) im Wesentlichen in der Orbitebene erstreckt.

3. Satellit nach einem der vorangehenden Ansprüche, **dadurch gekennzeichnet, dass** die Höhe des Antennenelements, die durch die Ausdehnung entlang der Gravitationsachse definiert ist, größer als seine senkrechte Ausdehnung ist, so dass der Satellit durch den Gravitationsgradienten entlang der Roll- und Nickachsen auf natürliche Art stabilisiert wird.

4. Satellit nach Anspruch 3, **dadurch gekennzeichnet, dass** das Antennenelement in seiner Höhenausdehnung einen Abschnitt aufweist, der nicht als Antenne dient, der eventuell teilweise hohl ist und der dazu beiträgt, den Satelliten über den Gravitationsgradienten entlang der Roll- und Nickachsen auf natürliche Art zu stabilisieren.

5. Satellit nach einem der vorangehenden Ansprüche, **dadurch gekennzeichnet, dass** er eine Solarzellengeneratorvorrichtung umfasst und dass die Zellen (13) der Solarzellengeneratorvorrichtung von dem Antennenelement (11) getragen werden.

6. Satellit nach einem der vorangehenden Ansprüche, **dadurch gekennzeichnet, dass** das Antennenelement Antennenfunktionen auf beiden Seiten erfüllt.

7. Satellit nach einem der Ansprüche 5 oder 6, **dadurch gekennzeichnet, dass** ein Teil des Antennenelements (11) keine Solarzellen (13) trägt und auf beiden Seiten als Antenne dient.

8. Satellit nach einem der vorangehenden Ansprüche, **dadurch gekennzeichnet, dass** das Antennenelement (11) geometrisch deformierbar ist und Vorrichtungen zum Einstellen der Phase und der Amplitude von gesendeten oder empfangenen Wellen über seine Oberfläche aufweist und dass er mehrere Positions- und/oder Deformations- und/oder Ausrichtungsfehler-Sensoren aufweist, die über das Antennenelement verteilt sind und die Messung von Deformationen und/oder Ausrichtungsfehlern sowie ihre Kompensation auf Höhe der Einstelleinrichtungen ermöglichen.

9. Satellit nach Anspruch 8, **dadurch gekennzeichnet, dass** die Sensoren Sensoren für terrestrische oder satellitengestützte Funkpositionsbestimmungen sind, die sowohl die Messung als auch dann die Kompensation von Abweichungen der absoluten Fluglage auf Höhe der Einstelleinrichtungen ermöglichen.

10. Satellit nach Anspruch 9, **dadurch gekennzeichnet, dass** die Sensoren GPS-Sensoren sind.

11. Satellit nach einem Ansprüche 9 oder 10, **dadurch gekennzeichnet, dass** er Einrichtungen für die differenzielle Verarbeitung von Phasenmessungen bei den Signalen für die Funkpositionsbestimmung umfasst, die von jedem Sensor ausgegeben werden, um die relativen Positionen der Sensoren sowie die absolute Lage der mittleren Ebene, die durch die Sensoren definiert wird, zu messen.

12. Satellit nach einem der vorangehenden Ansprüche, **dadurch gekennzeichnet, dass** er ein Logistikmodul umfasst, das in der Orbitalebene liegt, und dass sich das Antennenelement nur auf einer Seite des Logistikmoduls befindet.

13. Satellit nach einem der Ansprüche 1 bis 11, **dadurch gekennzeichnet, dass** er ein Logistikmodul umfasst, das in der Orbitalebene liegt, und dass sich das Antennenelement auf beiden Seiten des Logistikmoduls erstreckt.

14. Satellit nach Anspruch 13, **dadurch gekennzeichnet, dass** sich die beiden Teile des Antennenelements (11) in zwei verschiedenen Ebenen befinden, deren Schnittlinie durch den Erdmittelpunkt verläuft.

15. Satellit nach Anspruch 3, allein oder in Verbindung mit einem der Ansprüche 4 bis 14, **dadurch gekennzeichnet, dass** er ein Logistikmodul umfasst, dessen Schwerpunkt auf der kleinen Trägheitsachse des Antennenelements (11) angeordnet ist, so dass sich das natürliche Gleichgewicht auf Grund des Gravitationsgradienten entlang der Gravitationsachse des Antennenelements umso eher einstellt und die Kräftepaare aufgrund des solaren Drucks auf den Satelliten beschränkt bleiben.

16. Satellit nach einem der Ansprüche 11 bis 15 in Verbindung mit Anspruch 9, **dadurch gekennzeichnet, dass** es durch Hinzufügen eines Teils ohne Antennenfunktion zu dem Element (11) in der Nähe des Moduls ermöglicht wird, einerseits für die Antenne oder die Antennen des Elements (11) die Bedeckung durch das Logistikmodul zu minimieren und andererseits bei den Sensoren für die Funkpositionsbestimmung einen Winkelabstand in Bezug auf die Normale auf dem Element (11) von der Empfangsrichtung für Signale für die Funkpositionsbestimmung sicherzustellen, bei dem es diesseits zu keiner Mehrwegausbreitung auf Grund von Reflexion an dem Modul kommt und jenseits die Signale unbeachtet bleiben.

17. Satellit nach Anspruch 5, allein oder in Verbindung mit einem der Ansprüche 6 bis 16, **dadurch gekennzeichnet, dass** die Solarzellen (13) die Energieversorgung wenigstens einer Antenne des Antennenelements (11) sicherstellen.

18. Satellit nach Anspruch 17, **dadurch gekennzeichnet, dass** ein Teil des Antennenelements (11) keine Antennenfunktion hat und Solarzellen (13) trägt.

19. Satellit nach Anspruch 17 und 18 in Verbindung miteinander, **dadurch gekennzeichnet, dass** sich die Solarzellen für die Energieversorgung der genannten Antenne auf dem Rücken der genannten Antenne sowie eventuell auf Zwischenräumen ohne Antennenfunktion auf beiden Seiten der genannten Antenne befinden.

20. Satellit nach einem der Ansprüche 17 bis 19, **dadurch gekennzeichnet, dass** die Solarzellen (13) des Antennenelements (11) die Energieversorgung desselben sicherstellen.

21. Satellit nach Anspruch 18, allein oder in Verbindung mit einem der Ansprüche 19 und 20, **dadurch gekennzeichnet, dass** der (oder die) Teil(e) ohne Antennenfunktion, auf dem (denen) sich Solarzellen befinden, wenigstens die Versorgung des Logistikmoduls (12) außerhalb der Verdunkelungsphasen sicherstellen.

22. Satellit nach Anspruch 19, **dadurch gekennzeichnet, dass** eine Antenne ein Netz von elektronischen Elementareinheiten auf der Oberfläche umfasst, wobei jede Elementareinheit direkt versehen ist mit und über ein Einzelsegment verbunden ist mit einer oder mehreren Solarzellen (13).

23. Satellit nach Anspruch 22, **dadurch gekennzeichnet, dass** das Einzelsegment der Solarzelle(n) (13) direkt gegenüber der Elementareinheit angeordnet ist.

24. Satellit nach Anspruch 5, allein oder in Verbindung mit einem der Ansprüche 6 bis 23, **dadurch gekennzeichnet, dass** die Solarzellen (13) AsGa- oder Silizium-Zellen sind.

25. Satellit nach Anspruch 3, allein oder in Verbindung mit einem der Ansprüche 4 bis 24, **dadurch gekennzeichnet, dass** das Antennenelement (11) mehrere verschiedene Antennen für identische oder unterschiedliche Frequenzen nebeneinander entlang der Gravitationsachse umfasst.

26. Satellit nach Anspruch 24, **dadurch gekennzeichnet, dass** das Antennenelement (11) zwei Antennen der gleichen Frequenz für Radar- Interferometriebeobachtungen umfasst, wobei die Antennen entlang der lokalen vertikalen Achse beabstandet sind.

27. Satellit nach einem der vorangehenden Ansprüche mit wenigstens einem ebenen Element aus mehreren Kacheln, die wie bei einem Antennenelement gelenkig miteinander verbunden sind, sowie mit assoziierten oder Logistikeinrichtungen, **dadurch gekennzeichnet, dass** er eine Trägerhülle umfasst, die beim Start in ihrem Inneren die Einrichtungen und die Kacheln aufnimmt, und wenigstens eine pyrotechnische Klappe für das Ausfahren der Kacheln vorgesehen ist.

28. Satellit nach Anspruch 27, **dadurch gekennzeichnet, dass** die Trägerhülle zwei Halbschalen umfasst, wobei die eine die verschiedenen assoziierten und Logistikeinrichtungen aufnimmt und die andere eine pyrotechnische Naht hat, die eine Klappe mit zwei Blenden begrenzt und bei deren Explosion die beiden Blenden freigesetzt und abgestoßen werden, die danach durch zwei Scharniere in einer offenen Position gehalten werden, die entlang der Schnittfläche mit der ersten Halbschale angeordnet sind, so dass die Kacheln beim Start in der Aufnahme untergebracht werden können, die durch die Schalen definiert wird, und anschließend von einer einzigen Seite des Satelliten über die Hülle hinweg ausgefahren werden können.

29. Satellit nach Anspruch 27, **dadurch gekennzeichnet, dass** die Trägerhülle aus zwei auf einem Mittelteil zusammengesetzten Schalen besteht, wobei der Mittelteil die verschiedenen assoziierten und Logistikeinrichtungen aufnimmt, während jede der Seitenschalen eine pyrotechnische Naht aufweist, die eine Klappe mit zwei Blenden begrenzt und bei deren Explosion die beiden Blenden freigesetzt und abstoßen werden, die danach durch zwei Scharniere in einer offenen Position gehalten werden, die entlang der Schnittfläche mit dem Mittelteil angeordnet sind, so dass die Kacheln beim Start in den beiden Aufnahmen untergebracht werden können, die durch die beiden Seitenschalen und den Mittelteil definiert werden, und anschließend auf jeder Seite des Satelliten über die entsprechende Klappe ausgefahren werden können.

30. Satellit nach einem der Ansprüche 27 bis 29, **dadurch gekennzeichnet, dass** während der Startphase die Kacheln (14) zusammengefaltet sind und auf einer Platte gelagert sind, auf der sie mit Klammern (29) befestigt sind.

31. Satellit nach Anspruch 30, **dadurch gekennzeichnet, dass** über jeder Kachel auf der Platte unter einer Befestigungsklammer (29) wenigstens eine Manschette verläuft.

32. Satellit nach einem der Ansprüche 27 bis 31, **dadurch gekennzeichnet, dass** die kleinste Trägheitsachse der Trägerhülle und von verschiedenen Kacheln beim Start in Richtung der Achse der Startvorrichtung ausgerichtet ist und dass die Entfaltungsachse senkrecht auf der Achse der Startvorrichtung steht.

33. Satellit nach Anspruch 32, **dadurch gekennzeichnet, dass** die Außenform des Aufbaus beim Starten der Trägerhülle in der Art aerodynamisch angepasst ist, so dass sie die Startkappe ersetzt.

34. Satellit nach einem der Ansprüche 27 bis 33, **dadurch gekennzeichnet, dass** die Trägerhülle und die assoziierten und Logistikeinrichtungen das Logistikmodul bilden.

35. Satellit nach Anspruch 3 und 34 in Verbindung miteinander; **dadurch gekennzeichnet, dass** das Ausfahren in der vertikalen Richtung erfolgt.

36. Satellit nach einem der Ansprüche 27 bis 35, **dadurch gekennzeichnet, dass** eine Kachel eine Stapelstruktur aufweist, die eventuell eine Antennenkuppel (21), eine Strahlungskachel (22), eine NIDA-Zwischenstruktur (23) als Träger für Elektronikeinrichtungen, eventuell eine thermische Schutzschicht (24), eine Platte für Solarzellen (13) und/oder Strahlerelemente umfasst, wobei die Kachel außerdem Versteifungen (26) auf der Zwischenstruktur (23) und Träger für die Platte(n) mit den Solarzellen (13) und/oder den Strahlerelementen umfasst.

37. Satellit nach Anspruch 36 in Verbindung mit Anspruch 31, **dadurch gekennzeichnet, dass** eine Manschette (29) in der Nähe des Kreuzungspunktes von zwei Versteifungen (26) angeordnet ist.

38. Satellit nach einem der vorangehenden Ansprüche, **dadurch gekennzeichnet, dass** die Gruppe der Abschnitte des Elements (11), die sich durch ihre Antennenfunktion oder die gegebene oder fehlende Antennenfunktion unterscheiden, entlang der Entfaltungsachse der Kacheln derart verteilt ist, dass jede der Kacheln zu einer großen funktionellen Homogenität beiträgt.

39. Satellit nach einem der vorangehenden Ansprüche, **dadurch gekennzeichnet, dass** er in der Höhenausdehnung der Antenne ein Netz von Punkten für die Einstellung des Höhendiagramms der Antenne umfasst, dass das elementare Höhendiagramm des Antennenabschnittes zu jedem Einstellungspunkt derart fest ausgerichtet ist, dass der nutzbare Einfallsbereich abgedeckt ist, und dass der Zwischenraum zwischen diesen Punkten entlang der Höhe und das Elementardiagramm des Antennenabschnittes, wodurch die Gewinne der Hauptkeule sowie der parasitären Keulen im Netz moduliert werden, derart sind, dass die parasitären Keulen bei einer Verstellung der Hauptkeule beiderseits der Orientierungsachse des Elementardiagramms physikalisch durch die Antennenebene und eventuell das Logistikmodul maskiert werden, und zwar entweder so dass sie von der Erde abgelenkt werden oder mit einem sehr kleinen Gewinn auf die Erde treffen, so dass dadurch ein minimaler Gewinn für die Hauptkeule eingestellt wird.

40. Satellit nach Anspruch 39, **dadurch gekennzeichnet, dass** der Elementarabschnitt der Antenne zu jedem Einstellungspunkt durch eine parallele Umgruppierung ausgehend von einem gleichen Einstellungspunkt und in der Höhe von mehreren Strahlerelementen erfolgt und dass ein Phasenverschiebungsprofil mit einer festen und konstanten Rampe zwischen den Strahlerelementen eines gleichen Einstellungspunktes eingeführt wird.

41. Satellit nach einem der vorangehenden Ansprüche, **dadurch gekennzeichnet, dass** die Elementarabschnitte der Antenne zu jedem Einstellungspunkt in der Höhe in Sektionen umgruppiert werden, wobei jede mit einem Einstellungspunkt für Zeitverzögerung assoziiert wird, was es erlaubt, einen zeitlichen Ablauf der zentralen Quelle für Sendesignale (des Zentralpunktes für die Rekombination von empfangenen Signalen) für den auf der Erde angepeilten Punkt unabhängig von der durchlaufenen Sektion hin (und zurück) beizubehalten, was immer die Höhenpeilungsrichtung sei, und dass im Inneren einer gleichen Sektion eine feste, differenzielle Verzögerungsverteilung gegenüber (und ausgehend von) Elementarabschnitten der Antenne eingerichtet ist, wodurch für eine mittlere spezielle Peilrichtung ein seitlicher Verlauf (auch von dem auf der Erde angepeilten Punkt) unabhängig von dem in der Sektion durchlaufenen Elementarabschnitt sichergestellt wird, so dass die restliche zeitliche Desynchronisation entlang der Höhe der Antenne nur von der inkrementellen Verstellung um die Verstellungsvorrichtung abhängt und große Höhen in dem Abschnitt erreicht werden können.

42. Satellit nach einem der vorangehenden Ansprüche, **dadurch gekennzeichnet, dass** die Verteilung der Signale zu (und von) jeder der Sektionen zur Verzögerung sich aneinander anfügt, indem auf der Seite des Antennenelements (11) gegenüber dem Himmelskörper begonnen wird, um den sich der Satellit im Orbit befindet, wobei die Verkabelungskette einen Teil von notwendigen Verzögerungsleitungen bildet.
